# EUROPEAN PATENT APPLICATION

(11) **EP 4 626 100 A1**
(43) Date of publication of application: **01.10.2025**
(21) Application number: 23894521.6
(22) Date of filing: 17.11.2023
(51) Int. Cl.: H04W 72/02, H04W 72/0446, H04W 72/25, H04W 72/40, H04W 72/54, H04W 92/18

(54) **TERMINAL DEVICE AND COMMUNICATION METHOD**

(30) Priority: 24.11.2022 JP 2022187148
(71) Applicant: Sony Group Corporation, Tokyo 108-0075 (JP)
(72) Inventor: SHIMEZAWA, Kazuyuki, Tokyo 108-0075 (JP); MATSUDA, Hiroki, Tokyo 108-0075 (JP)
(74) Representative: Witte, Weller & Partner Patentanwälte mbB
(86) International application number: PCT/JP2023/041415
(87) International publication number: WO 2024/111512

(57) **Abstract**

A terminal device of the present disclosure includes a communication unit and a control unit. The communication unit performs sidelink communication with another terminal device. The control unit selects a resource for the sidelink communication based on an AI model. The communication unit transmits at least one of a PSCCH and a PSSCH to the other terminal device using the resource selected by the control unit.

## Description

### Field

The present disclosure relates to a terminal device and a communication method.

### Background

In the 3^{rd} Generation Partnership Project (3GPP (registered trademark)), D2D (Device-to-Device) communication for performing direct communication between terminals (UEs) is standardized as sidelink communication respectively by 4G LTE (Long Term Evolution) and 5G NR (New Radio). In the sidelink communication, V2X (Vehicle-to-Everything) communication is one of main use cases. As the V2X communication, V2V (Vehicle-to-Vehicle), V2I (Vehicle-to-Infrastructure), V2P (Vehicle-to-Pedestrian), and V2N (Vehicle-to-Network) are assumed.

In particular, in the sidelink communication in the 5G NR, Platooning, Advanced driving, Extended sensor, and Remote driving are assumed as Advanced V2X communication. In the sidelink communication in the 5G NR, standards are formulated to implement at least one of higher speed and larger capacity communication and lower delay and higher reliability communication compared with the sidelink communication in the 4G LTE.

As a use case of the sidelink communication, in addition to the V2X communication of the related art, extension and application to commercial use (a commercial use case) used in houses, offices, factories, and the like are expected. When the commercial use of the sidelink communication is assumed, higher speed communication and lower cost are required as compared with the V2X communication of the related art.

### Citation List

### Non Patent Literature

Non Patent Literature 1: "TS22.186, 3rd Generation Partnership Project; Technical Specification Group Services and System Aspects; Enhancement of 3GPP support for V2X scenarios; Stage 1 (Release 16)", [online], [Searched on November 17, 2022], Internet <https://www.3gpp.org/ftp//Specs/archive/22_series/22.186/2 2186-g20.zip>

### Summary

### Technical Problem

When the sidelink communication is performed, a transmission side terminal device performs SL (SideLink) sensing or the like and selects an SL resource to reduce collision with the sidelink communication by another terminal device.

As explained above, assuming that the sidelink communication is applied to various use cases in the future, improvement of selection control for the SL resource is required.

Therefore, the present disclosure provides a mechanism that can further improve selection control for SL resources in sidelink communication.

Note that the problem or the object explained above are merely one of a plurality of problems or objects that can be solved or achieved by a plurality of embodiments disclosed in the present specification. Solution to Problem

A terminal device of the present disclosure includes a communication unit and a control unit. The communication unit performs sidelink communication with another terminal device. The control unit selects a resource for the sidelink communication based on an AI model. The communication unit transmits at least one of a PSCCH and a PSSCH to the other terminal device using the resource selected by the control unit.

### Brief Description of Drawings

FIG. 1 is a diagram illustrating an overview of a wireless communication system according to an embodiment of the present disclosure.
FIG. 2 is a diagram for explaining an example of SL sensing.
FIG. 3 is a diagram for explaining another example of the SL sensing.
FIG. 4 is a diagram illustrating an example of a configuration of a neural network model.
FIG. 5 is a diagram illustrating a configuration example of a base station according to the embodiment of the present disclosure.
FIG. 6 is a diagram illustrating a configuration example of a terminal device according to the embodiment of the present disclosure.
FIG. 7 is a sequence diagram illustrating an example of a flow of a processing procedure of sidelink communication according to the embodiment of the present disclosure.
FIG. 8 is a sequence diagram illustrating another example of the flow of the processing procedure of the sidelink communication according to the embodiment of the present disclosure.
FIG. 9 is a sequence diagram illustrating another example of the flow of the processing procedure of the sidelink communication according to the embodiment of the present disclosure.

### Description of Embodiments

An embodiment of the present disclosure is explained in detail below with reference to the accompanying drawings. Note that, in the present specification and the drawings, components having substantially the same functional configurations are denoted by the same reference numerals and signs, whereby redundant explanation of the components is omitted.

In the present specification and the drawings, similar components in the embodiment are sometimes distinguished by adding different alphabets or numbers after the same reference numerals. However, when it is not particularly necessary to distinguish each of similar constituent elements, only the same reference number is added.

Each of one or more embodiments (including, examples, modifications, and application examples) explained below can be implemented independently. On the other hand, at least a part of a plurality of embodiments explained below may be implemented in combination with at least a part of other embodiments as appropriate. These plurality of embodiments can include new characteristics different from one another. Therefore, these plurality of embodiments can contribute to solving objects or problems different from one another and can achieve effects different from one another.

### <<1. Introduction>>

### <1.1. Overview of a wireless communication system>

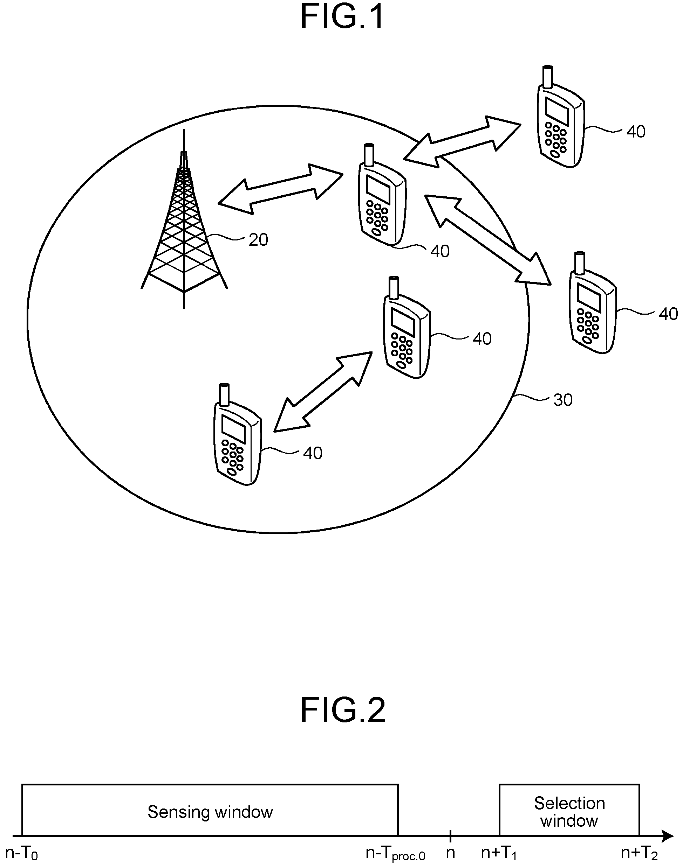

FIG. 1 is a diagram illustrating an overview of a wireless communication system according to an embodiment of the present disclosure.

The wireless communication system of FIG. 1 includes at least a base station 20 and a terminal device 40. The base station 20 can house a plurality of terminal devices 40. The base stations 20 can be connected to another base station 20 (not illustrated) by means of an inter-base station interface (e.g., an X2 interface).

The base station 20 can be connected to a core network by means of a base station-core interface. For example, the base station 20 can be connected to a not-illustrated EPC (Evolved Packet Core) by means of an S1 interface. The base station 20 can be connected to a not-illustrated MME (Mobility Management Entity) by means of an S1-MME interface. The base station 20 can be connected to a not-illustrated S-GW (Serving Gateway) by means of an S1-U interface. Similarly, the base station 20 can be connected to a not-illustrated 5GC (5G Core) by means of an NG interface. The base station 20 can be connected to a not-illustrated AMF (Access and mobility Management Function) and a not-illustrated SMF (Session Management Function) by means of an NG-C interface. The base station 20 can be connected to a not-illustrated UPF (User Plane Function) by means of an NG-U interface.

The S1 interface supports a many-to-many connection between at least one of the MME and the S-GW and the base station 20. The NG interface supports a many-to-many connection between at least one of the AMF, the SMF, and the UPF and the base station 20. In the present embodiment, the base station 20 and the terminal device 40 respectively support at least one of an LTE and an NR.

In the wireless communication system illustrated in FIG. 1, sidelink communication is performed. First, an overview of the sidelink communication is explained.

### <1.2. Sidelink communication>

### <1.2.1. Overview of the sidelink communication>

In the example illustrated in FIG. 1, two or more terminal devices 40 are present on the inside of a cell 30 (e.g., In coverage) configured by the base station 20. The terminal device 40 can perform the sidelink communication. Alternatively, when at least one terminal device 40 of the two or more terminal devices 40 is present on the inside of the cell 30 and the remaining terminal devices 40 are present on the outside of the cell 30 (e.g., Out of coverage), the terminal device 40 inside the cell 30 and the terminal devices 40 outside the cell 30 can perform the sidelink communication. The terminal device 40 present on the inside of the cell 30 can perform relay (Network to UE Relay or UE to Network Relay) between the base station 20 and the terminal devices 40 on the outside of the cell 30 by communicating with the base station 20.

Note that the terminal device 40 being present on the inside of the cell 30 can also be considered a state in which the quality of a downlink signal from the base station 20 received by the terminal device 40 is equal to or higher than a predetermined standard (i.e., satisfies a Cell Selection Criterion S in the cell 30). The terminal device 40 being present on the inside of the cell 30 can also be considered a state in which a predetermined downlink channel from the base station 20 received by the terminal device 40 can be decoded with a predetermined probability or more. In other words, the terminal device 40 being present on the outside of the cell 30 can also be considered a state in which the quality of the downlink signal from the base station 20 received by the terminal device 40 is equal to or lower than the predetermined standard. The terminal device 40 being present on the outside of the cell 30 can also be considered a state in which the predetermined downlink channel from the base station 20 received by the terminal device 40 cannot be decoded with the predetermined probability or more. Note that the terminal device 40 being present on the outside of the cell 30 may not be synonymous with "Out of coverage" that is one of states of the terminal device 40. That is, even when the cell 30 does not satisfy the Cell Selection Criterion S for the terminal device 40, when another cell satisfies the Cell Selection Criterion S, in some case, the other cell is in the In coverage state and is not in the Out of coverage state.

In the following explanation, in the present embodiment, when two terminal devices 40 that perform transmission and reception by the sidelink communication are distinguished, one is referred to as first terminal device 40_1 and the other is referred to as second terminal device 40_2. When the base station 20 and the terminal device 40 are not distinguished, the base station 20 or the terminal device 40 is also simply referred to as communication device 10. The communication device 10 can include the first terminal device 40_1 and the second terminal device 40_2.

### <1.2.2. Details of the sidelink communication>

The sidelink communication is direct communication between the first terminal device 40_1 and the second terminal device 40_2. In the sidelink communication, a resource pool is configured in the terminal device 40. The resource pool is a candidate of time and frequency resources used for transmission and reception of the sidelink communication and is configured by an RRC message transmitted from the base station 20 or by pre-configuration of the terminal device 40. The terminal device 40 selects a resource for transmission and reception of the sidelink out of the resource pool and performs the sidelink communication. Since the sidelink communication can be performed using uplink resources (an uplink subframe and an uplink component carrier), the resource pool can also be set in the uplink subframe or the uplink component carrier. The sidelink communication can be performed using dedicated resources.

A sidelink physical channel (a sidelink channel) or a sidelink signal includes a PSCCH (Physical Sidelink Control Channel), a PSSCH (Physical Sidelink Shared Channel), a PSFCH (Physical Sidelink Feedback Channel), or an S-SS/PSBCH block.

Transmission and reception of a sidelink physical channel and/or the sidelink signal are also respectively referred to as SL transmission and SL reception.

The PSCCH is used to transmit (receive when viewed from a reception side) sidelink control information (SCI). Mapping of information bits of the sidelink control information is defined as an SCI format. The sidelink control information includes a sidelink grant. The sidelink grant is used for scheduling the PSSCH.

The PSSCH is used to transmit sidelink data (sidelink shared channel: SL-SCH). Note that PSSCH may also be used to transmit control information (for example, MAC/RRC signaling) of upper layers such as an MAC layer and a PDCP layer.

The PSFCH is used to reply to the terminal device 40 on a transmission side with a HARQ response (ACK/NACK) to a decoding result of the PSSCH or the SL-SCH.

The resource pool is configured in the terminal device 40 by an SIB or a dedicated RRC message transmitted from the base station 20. Alternatively, the resource pool is configured by information concerning the resource pool preset in the terminal device 40. Note that, in the following explanation, all or part of the information set by the base station 20 can be set in the terminal device 40 in advance. A resource pool of time is indicated by period information, offset information, and subframe bitmap information. In addition, the resource pool of time may be indicated by the number of symbols or the number of slots. For example, the number of symbols of the PSCCH in the resource pool may be indicated by RRC IE: sl-TimeResourcePSCCH. For example, a period of the PSFCH resource in the resource pool may be indicated in units of slots or may be indicated by RRC IE: sl-PSFCH-Period. A resource pool of frequency is indicated by a start position of a resource block, an end position of the resource block, and the number of consecutive resource blocks.

### [Sidelink resource pool]

In the sidelink communication, a resource pool (a sidelink resource pool) is configured as a resource used for transmission and/or reception of a sidelink channel and/or a sidelink signal. In a frequency axis, the resource pool is configured by one or a plurality of consecutive subchannels. The subchannel is configured by one or more consecutive PRBs. The number of subchannels and the size of the subchannels are set by upper layer parameters (RRC parameters).

A slot configured as the resource pool can be indicated by a bitmap. Bits of the bitmap corresponds to slots that can be configured as the resource pool of the sidelink communication. For example, when a value of a bit indicates 1, a slot corresponding to the bit is configured as the resource pool. When the value of the bit indicates 0, the slot corresponding to the bit is not configured as the resource pool. The length of the bitmap is set by an upper layer.

A slot including an S-SS/PSBCH block (S-SSB) is not configured as the resource pool. A slot not semi-statically including a predetermined number of uplink symbols is not configured as the resource pool. A reserved slot is not configured as the resource pool. An S-SS (Sidelink-Synchronization Signal) is a signal used for synchronization in the sidelink communication. A PSBCH (Physical Sidelink Broadcast Channel) is a channel used for transmitting notification information (system information or the like) in the sidelink communication.

Note that a device that configures the resource pool may be other than the base station 20. Examples of the device other than the base station 20 include a representative terminal device 40 (a primary terminal device or a master terminal device).

### [Sensing method in the sidelink communication]

When a sidelink resource allocation mode 2 is set, the terminal device 40 selects a sidelink resource from the configured resource pool according to a predetermined procedure. The predetermined procedure includes predetermined sensing. For example, the terminal device 40 performs predetermined sensing defined in advance and selects the sidelink resource based on a result of the sensing.

As explained above, the sensing performed by the terminal device 40 in order to select the sidelink resource is described as sidelink sensing (hereinafter also simply referred to as sidelink (SL) sensing) concerning the sidelink communication. Details of the SL sensing are described in chapter 8.1.4 of 3GPP TS38.214.

As one of predetermined procedures for resource selection, the terminal device 40 receives a PSCCH transmitted from another terminal device 40 in the resource pool. The terminal device 40 grasps a resource allocation status (a usage status) of the resource pool based on the SCI transmitted by the PSCCH.

As the SL sensing, the transmission side terminal device 40 (hereinafter also described as TxUE 40T) receives the PSCCH transmitted from another terminal device 40 in the resource pool. The TxUE 40T grasps a resource allocation status (a usage status) of the resource pool based on the SCI transmitted by the received PSCCH.

Further, the TxUE 40T measures RSRP (Reference Signal Received Power) of a resource (resource to which the PSSCH is allocated) scheduled by the SCI transmitted by the received PSCCH, excludes the resource from resources for resource selection when the RSRP is equal to or greater than a predetermined value and selects a resource for sidelink (SL) communication out of the remaining resources.

In the RSRP measurement, PSCCH-RSRP and PSSCH-RSRP are defined and use of one of the PSCCH-RSRP and the PSSCH-RSRP is configured by RRC signaling. The PSCCH-RSRP and the PSSCH-RSRP are respectively measured on resources of a DMRS (DeModulation Reference Signal) resources of a PSCCH and a DMRS of a PSSCH.

Note that sensing is performed in units of predetermined frequency and time resources used in the sidelink communication. The predetermined frequency resource is a subchannel and configured by one or more resource blocks. The predetermined time resource may be one or a plurality of slots. Further or alternatively, the predetermined time resource may be one or a plurality of symbols.

### (SL Sensing in the case in which traffic periodically occurs)

FIG. 2 is a diagram for explaining an example of SL sensing. An SL sensing method illustrated in FIG. 2 is particularly suitable (used) when transmission data of sidelink communication performed by another terminal device 40 is traffic (Periodic transmission) that periodically occurs.

This method is also called Full sensing. In the full sensing, the TxUE 40T configures a Selection window (a resource selection period and a resource selection window) configured in a period of n+T₁ to n+T₂ when there is a trigger for resource selection at time n. The TxUE 40T sets a Sensing window (a sensing period and resource Sensing window) configured in a period from n-T₀ to n-T_{proc}, ₀ when there is a trigger for resource selection at time n. Since this Sensing window is a time further in the past than the time n, the TxUE 40T performs sensing in advance.

In this method, periodic transmission (Periodic traffic) is assumed as explained above. For that reason, a list of periodicity of possible sidelink (SL) transmission is configured for the TxUE 40T by RRC signaling. That is, the TxUE 40T can estimate a usage status of future resources from a usage status of resources in the past based on the periodicity.

Note that "RRC signaling" explained above or below means that one or a plurality of RRC parameters (Information Element: IE) are included in a predetermined RRC message (e.g., RRC Reconfiguration and RRC Setup) and transmitted from the base station 20 (e.g., gNB-CU) to the terminal device 40.

When the RRC message is transmitted in a downlink, the RRC message is transmitted from the base station 20(e.g., gNB) to the terminal device 40. When the RRC message is transmitted in an uplink, the RRC message is transmitted from the terminal device 40 to the base station 20. When the RRC message is transmitted in a sidelink, the RRC message is transmitted from the TxUE 40T to a reception side terminal device 40 (hereinafter also referred to as RxUE 40R).

Details of parameters are as explained below.

T₀={100,1100 [ms]}: A parameter indicating a start point in time of a Sensing window. Set by RRC signaling (RRC IE: sl-Sensing Window). Note that a unit of this parameter is millisecond and a unit of the other parameters is slot.

T₁: A value equal to or larger than 0 and equal to or smaller than T_{proc, 1} and selected by the TxUE 40T (a selection method for T₁ is an implementation matter of the UE 40). T_{proc, 1} is a parameter corresponding to a processing time of the TxUE 40T and is defined according to a subcarrier spacing (SCS). For example, T_{proc, 1} is T_{proc, 1}=3 for 15 kHz, 5 for 30 kHz, 9 for 60 kHz, and 17 for 120 kHz.

T₂: A value of equal to or larger than T₂ₘᵢₙ and equal to or smaller than the remaining time (Remaining Packet Delay Budget) of an allowable delay of the transmission data. The TxUE 40T selects T₂. T₂ₘᵢₙ is set by RRC signaling (sl-SelectionWindowList (RRC IE)). Possible values of T₂ₘᵢₙ are {1, 5, 10, and 20}.

T_{proc, 0}=1 for 15 kHz, 1 for 30 kHz, 2 for 60 kHz, and 4 for 120 kHz: Parameters corresponding to a processing time of the TxUE 40T and defined according to a subcarrier spacing.

### (Procedure of sidelink sensing)

When there is a trigger of resource selection at time n in the TxUE 40T, the TxUE 40T executes the following specific operation in Full sensing. Note that the following "setting" is setting performed inside the TxUE 40T.

(Step A1) The TxUE 40T defines (sets) the Selection window. More specifically, a candidate single slot resource R_{x, y} for transmission is defined as a set of contiguous subchannels L_{subCH} involving a subchannel x+j in a slot t'y^{SL}. Here, j (0, ... L_{subCH}-1) indicates the number of continuous subchannels L_{subCH}. The TxUE 40T assumes that any set of continuous subchannels L_{subCH} corresponds to any one of the following three of a1) to a3).

a1) Any set of consecutive subchannels L_{subCH} included in a corresponding resource pool in a time interval [n+T₁, n+T₂] corresponds to one candidate single slot resource fora UE (the terminal device 40. Hereinafter also described as UE 40) that performs Full sensing.

a2) For the UE 40 that performs periodic-based Partial sensing, any set of consecutive subchannels L_{subCH} included in a corresponding resource pool in a set of a plurality of candidate slots Y in the time interval [n+T₁, n+T₂] corresponds to one candidate single slot resource for the UE 40 (Y satisfies Y ≥ Yₘᵢₙ (RRC IE: minNumCandidateSlots) and is selected by the UE 40).

a3) For a UE that performs contiguous Partial sensing when a resource reservation interval P_{rsvp_TX}=0, any set of continuous subchannels L_{subCH} included in a corresponding resource pool in a set of a plurality of candidate slots Y' in the time interval [n+T₁, n+T₂] corresponds to one candidate single slot resource for the UE (Y' satisfies Y' ≥ Y'ₘᵢₙ and is selected by the UE).

A total of the plurality of candidate single-slot resources is represented by Mₜₒₜₐₗ.

(Step A2) The TxUE 40T defines (sets) a Sensing window. As explained above, the Sensing window is defined by a range of a plurality of slots represented by [n-T₀, T_{proc, 0}]([n-T₀, T_{proc, 0}^{SL}]) (in the case of Full sensing). Further, the TxUE 40T monitors (senses) a plurality of slots corresponding to a resource pool in the Sensing window. However, because of Half duplex restriction, the TxUE 40T may not monitor (sense) a slot transmitted by the TxUE 40T. In other words, the TxUE 40T monitors (senses) a plurality of slots corresponding to the resource pool in the Sensing window except for a slot in which transmission of the TxUE 40T has occurred. Operations (behaviors) of the TxUE 40T in the subsequent steps (step A3 and subsequent steps) are performed based on RSRP measured and a PSCCH decoded in the plurality of slots. When the UE performs the periodic-based Partial sensing, the UE 40 monitors a plurality of slots satisfying t_{y-k×P_reserve}^{SL}. Here, t_{y}^{SL} is one slot among the plurality of candidate slots selected above. The operations (the behaviors) of the TxUE 40T in the subsequent steps (step A3 and subsequent steps) are performed based on decoding processing for the PSCCH and the RSRP measurement in the plurality of slots.

(Step A3) The TxUE 40T sets an RSRP threshold Th(pᵢ, pⱼ). The RSRP threshold is an independent value that is determined based on a parameter (RRC IE: sl-Thres-RSRP-List) notified from the base station 20 and corresponds to priority of transmission data. More specifically, a value corresponding to an RSRP threshold indicated by an i-th field in the sl-Thres-RSRP-List is set as Th(pᵢ, pⱼ). Here, i=pᵢ+ (pⱼ-1) *8.

(Step A4) The TxUE 40T initializes all the candidates (the set of all the candidate single-slot resources) of the resource in the Selection window as a set S_{A}. Note that the candidates of the resource are predetermined frequency/time resource units used in the sidelink communication. In the following steps, the TxUE 40T excludes a resource corresponding to a predetermined condition from the set S_{A}.

(Step A5) The TxUE 40T excludes a resource (any candidate single-slot resource R_{x, y}) satisfying all of the following conditions b1) and b2) from the set S_{A}.

b1) A slot t'ₘ^{SL} not sensed in step A2.

b2) A slot that can be used for sidelink transmission based on a list of periodicity of the sidelink transmission (RRC IE: sl-ResourceReservePeriodList) and a decoded PSSCH (an SCI format 1-A received in the slot t'ₘ^{SL} and including a 'Resource reservation period field).

If the number of candidate single-slot resources R_{x, y} remaining in the set S_{A} is smaller than X*Mₜₒₜₐₗ, the set S_{A} is initialized back in step A4.

(Step A6) The TxUE 40T excludes a resource (any candidate single-slot resource R_{x, y}) satisfying all of the following conditions c1) to c3) from the set S_{A}.

c1) A resource indicated by the SCI transmitted by a PSSCH from another UE 40. More specifically, a case in which the TxUE 40T receives the SCI format 1-A in the slot t'ₘ^{SL} and a 'Resource reservation period' field (only if present) and a 'Priority' field in the received SCI format 1-A respectively indicate P_{rsvp_RX} and priors.

c2) By RSRP measurement, a resource whose measured value is higher than the RSRP threshold Th(prio_{RX}, prio_{TX}) set in step (A3).

c3) The SCI format received in the slot t'ₘ^{SL} or, if a 'Resource reservation period' field is present in the received SCI format 1-A, the same SCI format regarded as being received in a slot t'_{m +q× P'rsvp _RX}^{SL} (note that rsvp_RX is a subscript of P') determines a set of resource blocks and slots that overlap R_{x, y+j× P'rsvp _TX} (note that rsvp_RT is a subscript of P') for q=1, 2,..., Q and j=0, 1,..., Cᵣₑₛₑₗ-1. Here, P_{'rsvp _RX} is P_{rsvp_RX} converted into units of logical slots. If P_{rsvp_RX} is smaller than T_{scal} and n'-m ≤ P'ᵣₛᵥₚ__{RX}, Q= [T_{scal}/P_{rsvp_RX}]. If the UE 40 is configured to perform full sensing, T_{scal} is set to a selection window size T₂ converted into units of milliseconds. If the UE 40 is configured to perform Partial sensing, T_{scal}=t'_{yL}^{SL}-(t'_{yi}^{SL}-t'_{proc, 1}^{SL}) (note that L and i are subscripts of y) is converted in units of milliseconds. Here, the slot t'_{y}t^{SL}(note that L is a subscript of y) is the last slot of Y or Y' candidate slots. The slot t'_{yi}^{SL}(note that i is a subscript of y) is the first slot of the Y or Y' candidate slots.

(Step A7) When the number of resources remaining in the set S_{A} is smaller than a predetermined value X*Mₜₒₜₐₗ obtained based on a parameter set by RRC signaling, the TxUE 40T increases the value Th(pᵢ, pⱼ) of the RSRP threshold by a predetermined value (3dB) and performs the operation again from step A4.

(Step A8) The TxUE 40T selects a resource for sidelink transmission at random from the resources remaining in the set S_{A}. More specifically, a physical layer of the TxUE 40T reports the set S_{A} to upper layers (including an MAC layer) in the TxUE 40T. The MAC layer of the TxUE 40T selects, at random, one or a plurality of time resources and one or a plurality of frequency resources for one transmission opportunity from the resources remaining in the set S_{A}.

The TxUE 40T executes the SL sensing by executing the procedures of steps A1 to A8 explained above to execute SL sensing.

In the Full sensing explained above, the TxUE 40T determines, at a point in time when transmission data is generated, using a sensing result in the past, a sidelink resource which transmits the transmission data. For that reason, the TxUE 40T always performs sensing processing.

For example, when the TxUE 40T is a device driven by a small battery such as a smartphone, it is unpreferable from the viewpoint of power consumption to always perform the sensing processing. For that reason, Partial sensing for reducing a part of a Sensing window is standardized in order to reduce power consumption.

In the Partial sensing, the TxUE 40T basically performs resource selection from sensed resources and does not perform resource selection from the other resources. This sensing method is also called Periodic Based Partial Sensing (PBPS).

### (SL sensing in the case in which traffic aperiodically occurs)

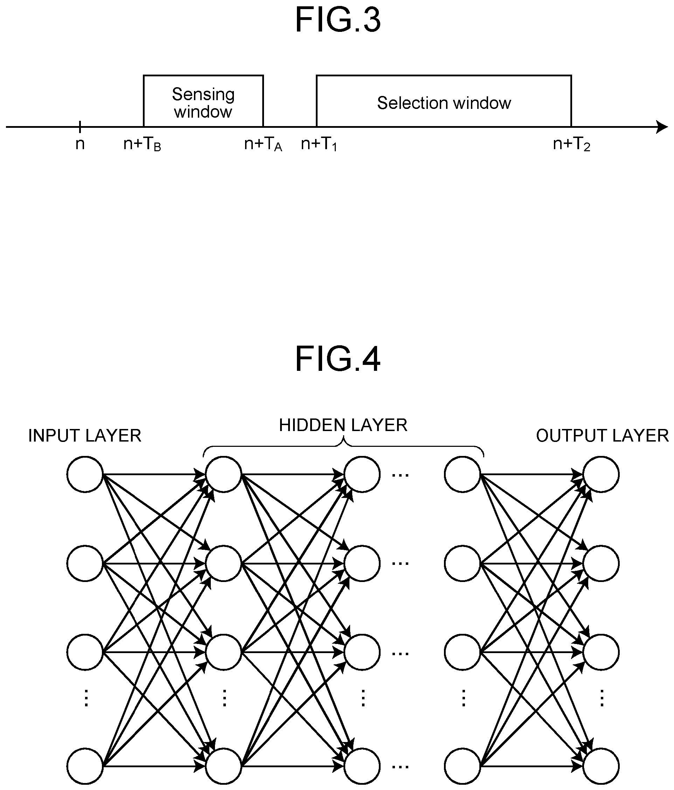

FIG. 3 is a diagram for explaining another example of the SL sensing. An SL sensing method illustrated in FIG. 3 is particularly suitable (used) when transmission data of sidelink communication performed by another terminal device 40 is aperiodically occurring traffic (Aperiodic transmission). This method is also called Contiguous Partial Sensing (CPS).

In the CPS, the TxUE 40T basically defines a Sensing window immediately before a Selection window and performs sensing. The Sensing window in the CPS is configured in a period of n+T_{B} to n+T_{A}. T_{A} and T_{B} can be respectively positive values, negative values, or zero depending on a use case or a situation. For example, T_{B} is a value determined based on a processing time and is T_{proc, 0}+T_{proc, 1}. For example, T_{A} is set by RRC signaling.

### [Inter UE 40 coordination]

In order to reduce collisions of SL transmission in sidelink communication, the RxUE 40R or another UE 40 can notify control information (coordination information) to the TxUE 40T. That is, coordination between the UEs 40 (Inter UE Coordination: IUC) can be defined.

In the following explanation of the IUC, the RxUE 40R or another UE is also referred to as UE 40A and the TxUE 40T is also referred to as UE 40B.

The following two schemes are defined for the IUC.

### (IUC scheme 1)

In this scheme, control information (coordination information) transmitted from the UE 40A to the UE 40B indicates resources (preferred resources) suitable for or resources (non-preferred resources) unsuitable for the transmission of the UE 40B. In other words, in this scheme, the control information (the coordination information) transmitted from the UE 40A to the UE 40B may indicate resources suitable for or resources unsuitable for reception by the UE 40A.

### (IUC scheme 2)

In this scheme, control information (coordination information) transmitted from the UE 40A to the UE 40B indicates that (it is expected that) collision occurs (expected resource conflict) or it is likely that collision occurs (potential resource conflict) in a resource indicated by side link control information of the UE 40B.

### <1.3. AI/ML in wireless communication>

In recent years, technology development for utilizing AI (Artificial Intelligence)/ML (Machine Learning) for various types of control of wireless communication has been advanced. Also in 3GPP (registered trademark), downlink communication or uplink communication between the base station 20 and the terminal device 40 has been studied. The AI/ML in the wireless communication or a part of functions thereof may be defined as at least one name of "RAN intelligence", "data collection for NR", "RAN data collection", "data analytics", "data analytics function", "RAN data analytics", and "RAN data analytics function".

Specifically, use cases such as extension of CSI(Channel State Information) feedback (extension for the purpose of, for example, reducing overhead and improving CSI accuracy), performance improvement of beam control (for example, accuracy improvement of beam estimation and beam selection), and accuracy improvement of position information are assumed.

Details are described in, for example, the following literature.
Literature: RP-221348, Revised SID: Study on Artificial Intelligence (AI)/Machine Learning (ML) for NR Air Interface, June 6-9, 2022, Internet <URL: https://www.3gpp.org/ftp/TSG_RAN/TSG_RAN/TSGR_96/Docs/RP-221348.zip>

### [AI/ML in the embodiment]

The AI/ML model explained in the present embodiment explained below is, for example, a neural network (NN; Neural Network) model obtained by machine learning or deep learning.

FIG. 4 is a diagram illustrating an example of a configuration of a neural network model. The neural network is used in machine learning (ML) and the like.

As illustrated in FIG. 4, the neural network includes layers called input layer, hidden layer (or intermediate layer), and output layer. The layers include at least one node. Nodes are connected via edges. The layers have a function called an activation function and the edges are weighted. A neural network model by the deep learning is configured by a plurality of hidden layers.

The machine learning is one of methods of artificial intelligence that causes a computer to learn and perform recognition, determination, or estimation like a human. The processing performed by the machine learning includes two types of processing including learning processing and determination processing for recognition, determination, or estimation.

In the learning processing, a device (not illustrated) that carries out learning causes the neural network model to learn using learning data to optimize a weighting factor of the edges. A model extracted as a result of the learning processing is a learned model.

In the determination processing, a device (not illustrated) that carries out determination inputs unknown data to the learned model. The learned model outputs a result of recognition, determination, or estimation for the unknown data as a result of arithmetic processing.

As a general algorithm used in the neural network, there are, for example,
Convolutional Neural Network (CNN),
Recurrent Neural Network (RNN), and
LSTM (Long Short-Term Memory).

### (CNN)

In the CNN, a hidden layer is configured by layers called convolution layer and pooling layer. In the convolution layer, filtering by a convolution operation is carried out and data called feature map is extracted. In the pooling layer, information of the feature map output from the convolution layer is compressed and down-sampling is carried out.

The CNN is used for, for example, image recognition. In this case, for example, information of pixels also referred to as pixels of an image is input to the input layer of the CNN model. Information relating to a recognized image is output from the output layer of the CNN model.

### (RNN)

The RNN has a network structure in which a value of the hidden layer is recursively input to the hidden layer. In the RNN, for example, short-period time-series data is processed.

### (LSTM)

The LSTM can hold the influence of an output of the far past by introducing a parameter for holding a state of the intermediate layer called memory cell into an intermediate layer output of the RNN. That is, in the LSTM, time-series data in a longer period than the RNN is processed.

An arithmetic model (an AI/ML model) of the AI/ML according to the present embodiment is configured by one or more CNN models, RNN models, and/or LSTM models. The one or more CNN models, RNN models, and/or LSTM models configuring the arithmetic model are, for example, processed dependently or in parallel.

Here, parameters relating to the arithmetic model include layer configuration of the input layer, the hidden layer (or the intermediate layer), and the output layer, the numbers of nodes configuring the layers, and weighting coefficients of the edges connecting the nodes.

For example, a device (for example, in an example explained below, the base station 20) that provides an arithmetic model may define a configuration of the arithmetic model in advance and provide the weighting coefficients of the edges as variables (parameters). Alternatively, the device that provides the arithmetic model may define configurations of a plurality of arithmetic models in advance, allocate IDs for identifying the configurations of the arithmetic models, and provide the IDs.

### <1.4. Overview of the proposed technology>

As explained above, in the sidelink communication, when the SL resource is selected for the SL transmission, the TxUE 40T reduces collisions with the SL transmission by another UE 40 by performing the SL sensing and the like. That is, the TxUE 40T estimates a use situation of the SL resource in future based on a use situation of the past SL resource in the past by performing the SL sensing.

However, this estimation method can be implemented because a limited use case such as V2X communication is assumed. On the other hand, when it is assumed that the sidelink communication is extended to other various use cases in the future, it is likely that implementation of the estimation method is difficult.

Even when the V2X communication is assumed, a use situation of the SL resources that cannot be recognized (estimated) by the SL sensing can occur because of various factors. For that reason, improvement of SL resource selection control is requested particularly in an environment in which high-quality communication is required.

Examples of a technology that can contribute to the improvement of the SL resource selection control include the AI/ML technology. In the sidelink communication, the technology extension of the SL resource selection control utilizing the AI/ML can be important.

However, the SL resource selection control utilizing the AI/ML has not been discussed. Currently, in 3GPP (registered trademark), a method of utilizing the AI/ML assuming downlink and uplink has been discussed. However, it is difficult to directly apply this utilization method to the sidelink communication.

Thus, the terminal device 40 (for example, the TxUE 40T) according to the present embodiment executes the SL resource selection control utilizing the AI/ML. For example, the terminal device 40 includes a communication unit and a control unit. The communication unit performs the sidelink communication with another terminal device 40 (for example, the RxUE 40R). The control unit selects a resource for the sidelink communication based on an AI model. The communication unit transmits at least one of the PSCCH and the PSSCH to the other terminal device 40(for example, the RxUE 40R) using the resource selected by the control unit.

As explained above, the terminal device 40 (for example, the TxUE 40T) selects an SL resource based on the AI model. Accordingly, the terminal device 40 can further improve the SL resource selection control.

### <<2. Configuration of the communication system>>

### <2.1. Configuration example of the base station>

First, the base station 20 is explained. The base station 20 is a communication device that operates the cell 30 (see FIG. 1) and provides a wireless communication service to one or more terminal devices 40 located on the inside of the coverage of the cell 30 (e.g., In coverage). The cell 30 is operated according to any wireless communication scheme such as an LTE or an NR. The base station 20 is connected to a core network. The core network is connected to a packet data network via a gateway device. The base station 20 operates a beam identifiable by an SSB (Synchronization Signal/PBCH Block) and transmits and receives data to and from one or more communication devices 10 via one or more beams.

Note that the base station 20 may be configured by a set of a plurality of physical or logical devices. For example, in the embodiment of the present disclosure, the base station 20 may be distinguished into a plurality of devices of a BBU (Baseband Unit) and an RU (Radio Unit) and interpreted as an aggregate of the plurality of devices. Further or alternatively, in the embodiment of the present disclosure, the base station 20 may be one or both of the BBU and the RU. The BBU and the RU may be connected by a predetermined interface (for example, an eCPRI or O-RAN interface). Further or alternatively, the RU may be called Remote Radio Unit (RRU) or Radio DoT (RD). Further or alternatively, the RU may correspond to a gNB-DU explained below. Further or alternatively, the BBU may correspond to a gNB-CU explained below. Alternatively, the RU may be connected to a gNB-DU explained below. Further, the BBU may correspond to a combination of the gNB-CU and the gNB-DU explained below. Further or alternatively, the RU may be a device formed integrally with an antenna. An antenna (for example, the antenna formed integrally with the RU) included in the base station 20 may adopt an Advanced Antenna System and support MIMO (for example, FD-MIMO) and beam forming. In the Advanced Antenna System, an antenna (for example, the antenna formed integrally with the RU) included in the base station 20 may include, for example, 64 transmission antenna ports and 64 reception antenna ports.

A plurality of the base stations 20 may be connected to one another. The one or more base stations 20 may be included in a radio access network (RAN). That is, the base station 20 may be simply called RAN, RAN node, AN (Access Network), or AN node. The RAN in the LTE is called EUTRAN (Enhanced Universal Terrestrial RAN). The RAN in the NR is referred to as NGRAN. The RAN in W-CDMA (UMTS) is referred to as UTRAN. The base station 20 of the LTE is called eNodeB (Evolved Node B) or eNB. That is, the EUTRAN includes one or more eNodeBs (eNBs). The base station 20 of the NR is called gNodeB or gNB. That is, the NGRAN includes one or more of gNBs. Further, the EUTRAN may include the gNB (an en-gNB) connected to a core network (EPC) in an LTE communication system (EPS). Similarly, the NGRAN may include an ng-eNB connected to a core network 5GC in a 5G communications system (5GS). Further or alternatively, when the base station 20 is the eNB, the gNB, or the like, the base station 20 may be called 3GPP Access. Further or alternatively, when the base station 20 is a wireless access point (e.g., an access point of WiFi (registered trademark), the base station 20 may be called Non-3GPP Access. Further or alternatively, the base station 20 may be an optical extension device called RRH (Remote Radio Head). Further or alternatively, when the base station 20 is the gNB, the base station 20 may be called combination of the gNB CU (Central Unit) and the gNB DU (Distributed Unit) or any one of the gNB CU and the gNB DU. The gNB CU (Central Unit) hosts, for communication with the UE, a plurality of upper layers (for example, RRC, SDAP, and PDCP) of an Access Stratum. On the other hand, the gNB-DU hosts a plurality of lower layers (for example, RLC, MAC, and PHY) of the Access Stratum. That is, among messages and information explained below, RRC signalling (for example, various SIBs including MIB and SIB1, an RRCSetup message, and an RRCReconfiguration message) may be generated by the gNB CU and, on the other hand, a DCI and various physical channels (for example, PDCCH and PBCH) explained below may be generated by the gNB-DU. Alternatively, in the RRC signalling, for example, a part of configurations (configuration information) such as IE: cellGroupConfig may be generated by the gNB-DU and the remaining configurations may be generated by the gNB-CU. These configurations (configuration information) may be transmitted and received by an F1 interface explained below. The base station 20 may be configured to be capable of communicating with another base station 20. For example, when a plurality of base stations 20 are combinations of eNBs or eNBs and en-gNBs, the base stations 20 may be connected by an X2 interface. Further or alternatively, when the plurality of base stations 20 are combinations of gNBs or gn-eNBs and gNBs, the devices may be connected by an Xn interface. Further or alternatively, when the plurality of base stations 20 are a combination of gNB CUs (Central Units) and gNB DUs (Distributed Units), the devices may be connected by the F1 interface explained above. A message/information (RRC signalling or DCI information and Physical Channel) explained below may be communicated (for example, via the X2, Xn, or F1 interface) among the plurality of base stations 20.

Further, as explained above, the base station 20 may be configured to manage a plurality of cells. A cell provided by the base station 20 is referred to as Serving cell(s). The Serving cells include a PCell (Primary Cell) and an SCell (Secondary Cell). When Dual Connectivity (for example, EUTRA-EUTRA Dual Connectivity, EUTRA-NR Dual Connectivity (ENDC), EUTRA-NR Dual Connectivity with 5GC, NR-EUTRA Dual Connectivity (NEDC), or NR-NR Dual Connectivity) is provided to the UE (for example, the terminal device 40), the PCell and zero or one or more SCell(s) provided by an MN (Master Node) are called Master Cell Group. Further, the Serving cell may include a PSCell (Primary Secondary Cell or Primary SCG Cell). That is, when the Dual Connectivity is provided to the UE, the PSCell and zero or one or more SCell(s) provided by the SN (Secondary Node) are called Secondary Cell Group (SCG). Unless special setting (for example, PUCCH on SCell) is performed, a physical uplink control channel (PUCCH) is transmitted by the PCell and the PSCell but is not transmitted by the SCell. A Radio Link Failure is also detected in the PCell and the PSCell but is not detected in the SCell (may not be detected). As explained above, since the PCell and the PSCell have a special role in the Serving Cell (s), the PCell and the PSCell are also called Special Cells (SpCells). One Downlink Component Carrier and one Uplink Component Carrier may be associated with one cell. A system bandwidth corresponding to one cell may be divided into a plurality of Bandwidth Parts. In this case, one or more Bandwidth Parts (BWPs) may be set for the UE and one Bandwidth Part may be used for the UE as an Active BWP. Radio resources (for example, a frequency band, a numerology (subcarrier spacing), and a slot format (slot configuration)) that can be used by the terminal device 40 may be different for each cell, each component carrier, or each BWP.

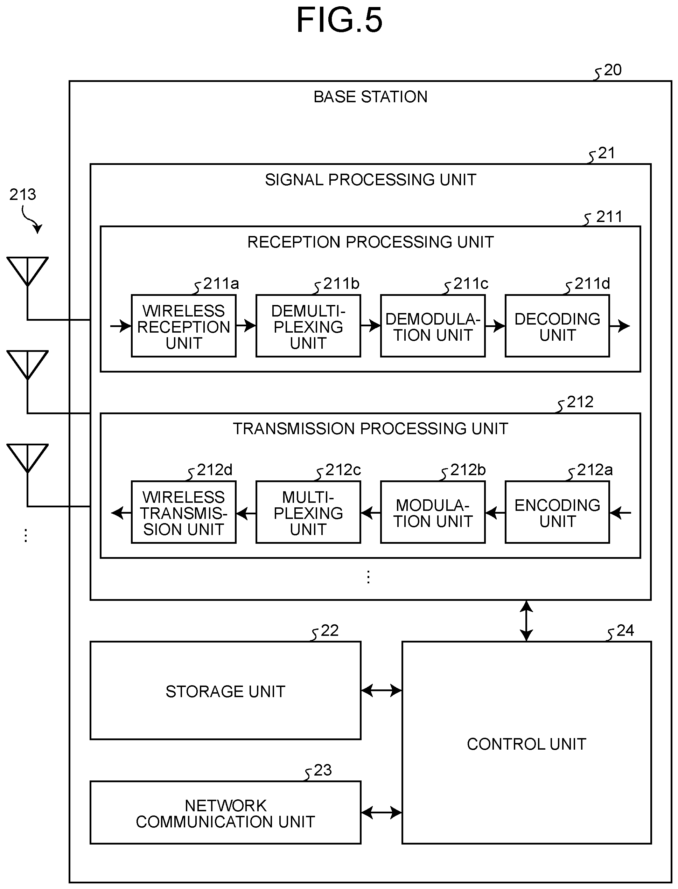

FIG. 5 is a diagram illustrating a configuration example of the base station 20 according to the embodiment of the present disclosure. The base station 20 is a communication device (a wireless system) that wirelessly communicates with the terminal device 40. The base station 20 is a type of an information processing device.

The base station 20 includes a signal processing unit 21, a storage unit 22, a network communication unit 23, and a control unit 24. Note that the configuration illustrated in FIG. 5 is a functional configuration. A hardware configuration may be different from this configuration. The functions of the base station 20 may be implemented to be distributed to a plurality of physically separated devices.

The signal processing unit 21 is a wireless communication interface (a communication unit) that wirelessly communicates with other communication devices (for example, the terminal device 40 and the other base station 20). The signal processing unit 21 is a wireless transceiver that operates under control of the control unit 24. The signal processing unit 21 may be adapted to a plurality of wireless access schemes. For example, the signal processing unit 21 may be adapted to both of the NR and the LTE. The signal processing unit 21 may be adapted to other cellular communication schemes such as W-CDMA and cdma2000. The signal processing unit 21 may be adapted to a wireless LAN communication scheme in addition to the cellular communication scheme. Naturally, the signal processing unit 21 may be adapted to only one wireless access scheme.

The signal processing unit 21 includes a reception processing unit 211, a transmission processing unit 212, and an antenna 213. The signal processing unit 21 may include a plurality of reception processing units 211, a plurality of transmission processing units 212, and a plurality of antennas 213. Note that, when the signal processing unit 21 is adapted to a plurality of wireless access methods, the units of the signal processing unit 21 can be individually configured for each wireless access scheme. For example, if the base station 20 is adapted to the NR and the LTE, the reception processing unit 211 and the transmission processing unit 212 may be individually configured by the NR and the LTE.

The reception processing unit 211 processes an uplink signal received via the antenna 213. The reception processing unit 211 includes a wireless reception unit 211a, a demultiplexing unit 211b, a demodulation unit 211c, and a decoding unit 211d.

The wireless reception unit 211a performs, on the uplink signal, down-conversion, removal of an unnecessary frequency component, control of an amplification level, quadrature demodulation, conversion into a digital signal, removal of a guard interval, extraction of a frequency domain signal by fast Fourier transform, and the like. For example, it is assumed that the wireless access scheme of the base station 20 is a cellular communication scheme such as the LTE. At this time, the demultiplexing unit 211b demultiplexes an uplink channel such as a PUSCH (Physical Uplink Shared Channel) or a PUCCH (Physical Uplink Control Channel) and an uplink reference signal from a signal output from the wireless reception unit 211a. The demodulation unit 211c demodulates a reception signal using a modulation scheme such as BPSK (Binary Phase Shift Keying) or QPSK (Quadrature Phase Shift Keying) with respect to a modulation symbol of the uplink channel. The modulation scheme used by the demodulation unit 211c may be multi-value QAM such as 16QAM (Quadrature Amplitude Modulation), 64QAM, or 256QAM. The decoding unit 211d performs decode processing on an encoded bit of the demodulated uplink channel. The decoded uplink data and uplink control information are output to the control unit 24.

The transmission processing unit 212 performs transmission processing for downlink control information and downlink data. The transmission processing unit 212 includes an encoding unit 212a, a modulation unit 212b, a multiplexing unit 212c, and a wireless transmission unit 212d.

The encoding unit 212a encodes the downlink control information and the downlink data input from the control unit 24 using an encoding scheme such as block encoding, convolutional encoding, or turbo encoding. Here, as the encoding, encoding by a polar code or encoding by an LDPC code (Low Density Parity Check Code) may be performed.

The modulation unit 212b modulates coded bits output from the encoding unit 212a with a predetermined modulation scheme such as BPSK, QPSK, 16QAM, 64QAM, or 256QAM. The multiplexing unit 212c multiplexes modulation symbols of channels and a downlink reference signal and arranges the modulation symbols and the downlink reference signal in a predetermined resource element.

The wireless transmission unit 212d performs various kinds of signal processing on a signal from the multiplexing unit 212c. For example, the wireless transmission unit 212d performs processing such as conversion into a time domain by fast Fourier transform, addition of a guard interval, generation of a baseband digital signal, conversion into an analog signal, quadrature modulation, up-conversion, removal of an extra frequency component, and power amplification. A signal generated by the transmission processing unit 212 is transmitted from the antenna 213.

The storage unit 22 is a data readable/writable storage device such as a DRAM (Dynamic Random Access Memory), an SRAM (Static Random Access Memory), a flash memory, or a hard disk. The storage unit 22 functions as storage means of the base station 20.

The network communication unit 23 is a communication interface for communicating with the other devices (for example, the other base stations 20). For example, the network communication unit 23 is a LAN (Local Area Network) interface such as an NIC (Network Interface Card). The network communication unit 23 may be a USB (Universal Serial Bus) interface configured by a USB host controller, a USB port, and the like. The network communication unit 23 may be a wired interface or may be a wireless interface. The network communication unit 23 functions as network communication means of the base station 20. The network communication unit 23 communicates with the other devices under control of the control unit 24.

The control unit 24 is a controller that controls the units of the base station 20. The control unit 24 is implemented by a processor such as a CPU (Central Processing Unit) or an MPU (Micro Processing Unit). For example, the control unit 24 is implemented by the processor executing various programs stored in a storage device inside the base station 20 using a RAM (Random Access Memory) or the like as a work area. Note that the control unit 24 may be implemented by an integrated circuit such as an ASIC (Application Specific Integrated Circuit) or an FPGA (Field Programmable Gate Array). All of the CPU, the MPU, the ASIC, and the FPGA can be regarded as the controller.

### <2.2. Configuration Example of the terminal device>

Next, the terminal device 40 is explained. The terminal device 40 is a communication device that wirelessly communicates with the base station 20 based on control by the base station 20.

The terminal device 40 is a wireless communication device that wirelessly communicates with the other devices. The terminal device 40 is, for example, a sensor or a camera device having a communication function, a mobile phone, a smart device (a smartphone or a tablet terminal), a PDA (Personal Digital Assistant), or a personal computer. The terminal device 40 may be a head mounted display, VR goggles, or the like having a function of wirelessly transmitting and receiving data. The terminal device 40 may be a moving body such as an automobile or a drone.

For example, the terminal device 40 wirelessly communicates with another terminal device 40 based on control by the base station 20 or autonomously. In that case, the terminal device 40 transmits a sidelink signal to the other terminal device 40 and receives a sidelink signal from the other terminal device 40 in the PC 5 link. Transmission and reception of the sidelink signals by the terminal device 40 are collectively described as sidelink communication. When performing the sidelink communication, the terminal device 40 may be capable of using an automatic retransmission technique such as HARQ (Hybrid Automatic Repeat reQuest).

The terminal device 40 may be capable of performing NOMA (Non Orthogonal Multiple Access) communication with the base station 20. Note that the terminal device 40 may also be capable of performing the NOMA communication in communication (sidelink) with the other terminal devices 40. The terminal device 40 may be capable of performing LPWA (Low Power Wide Area) communication with the other communication devices (for example, the base station 20 and the other terminal devices 40). Besides, the wireless communication used by the terminal device 40 may be wireless communication using a millimeter wave or a terahertz wave. Note that the wireless communication (including the sidelink communication) used by the terminal device 40 may be wireless communication using radio waves or may be wireless communication (optical wireless) using infrared rays or visible light.

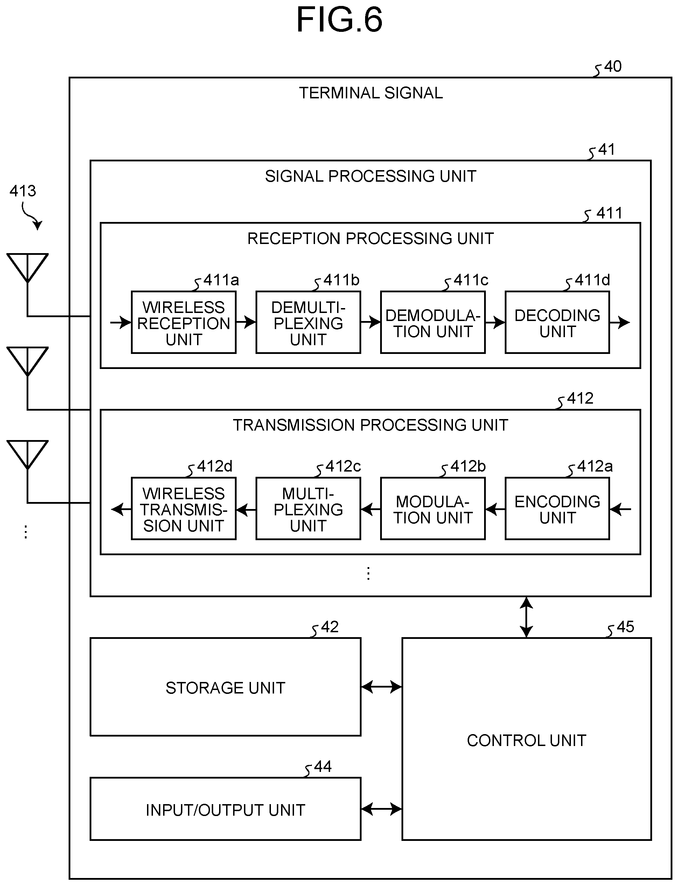

FIG. 6 is a diagram illustrating a configuration example of the terminal device 40 according to the embodiment of the present disclosure. The terminal device 40 is a communication device (a wireless system) that wirelessly communicates with the base station 20. The terminal device 40 is a type of an information processing device.

The terminal device 40 includes a signal processing unit 41, a storage unit 42, an input/output unit 44, and a control unit 45. Note that the configuration illustrated in FIG. 6 is a functional configuration. A hardware configuration may be different from this configuration. The functions of the terminal device 40 may be distributed and implemented in a plurality of physically separated components.

The signal processing unit 41 is a wireless communication interface that wirelessly communicates with the other communication devices (for example, the base station 20 and the other terminal devices 40). The signal processing unit 41 is a wireless transceiver that operates according to control of the control unit 45. The signal processing unit 41 is adapted to one or more wireless access schemes. For example, the signal processing unit 41 is adapted to both of the NR and the LTE. The signal processing unit 41 may be adapted to other wireless access schemes such as W-CDMA and cdma2000.

The signal processing unit 41 includes a reception processing unit 411, a transmission processing unit 412, and an antenna 413. The signal processing unit 41 may include a plurality of reception processing units 411, a plurality of transmission processing units 412, and a plurality of antennas 413. Note that, when the signal processing unit 41 is adapted to a plurality of wireless access schemes, the units of the signal processing unit 41 can be individually configured for each of wireless access schemes. For example, the reception processing unit 411 and the transmission processing unit 412 may be individually configured by the LTE and the NR. The configurations of the reception processing unit 411 and the transmission processing unit 412 are the same as the configurations of the reception processing unit 211 and the transmission processing unit 212 of the base station 20.

The storage unit 42 is a data readable/writable storage device such as a DRAM, an SRAM, a flash memory, or a hard disk. The storage unit 42 functions as storage means of the terminal device 40.

The input/output unit 44 is a user interface for exchanging information with the user. For example, the input/output unit 44 is an operation device for the user to perform various kinds of operation, such as a keyboard, a mouse, an operation key, or a touch panel. Alternatively, the input/output unit 44 is a display device such as a liquid crystal display or an organic EL (electroluminescence) display. The input/output unit 44 may be an acoustic device such as a speaker or a buzzer. The input/output unit 44 may be a lighting device such as an LED (Light Emitting Diode) lamp. The input/output unit 44 functions as input/output means(input means, output means, operation means, or notification means) of the terminal device 40. Note that, when the terminal device 40 is a device such as a sensor, the input/output unit 44 may be omitted.

The control unit 45 is a controller that controls the units of the terminal device 40. The control unit 45 is implemented by a processor such as a CPU or an MPU. For example, the control unit 45 is implemented by the processor executing various programs stored in a storage device inside the terminal device 40 using a RAM or the like as a work area. Note that the control unit 45 may be implemented by an integrated circuit such as an ASIC or an FPGA. All of the CPU, the MPU, the ASIC, and the FPGA can be regarded as the controller.

### <<3. Technical features>>

### <3.1. Control method in the SL resource selection utilizing the AI/ML>

In the following explanation, an example of a control method in the SL resource selection utilizing the AI/ML is explained. In the explanation, the SL sensing method (e.g., steps A1 to A8) explained above is sometimes referred to.

Resources in the present embodiment is a time resource, a frequency resource, and/or a space resource. For example, the resources include a radio band, a component carrier, a subchannel, a resource block, a resource block group, a subcarrier, a subchannel, a slot, a subframe, a radio frame, a symbol, a beam, an area, a zone, a direction, and an orientation.

In the present embodiment, control can be performed based on a predetermined resource (that is, a predetermined time resource, a predetermined frequency resource, and/or a predetermined space resource). The resources (units of the resources) to be controlled may be defined or set differently according to the control and can be defined or set in advance for the each control.

The SL resource selection control according to the present embodiment can be implemented by an AI model (for example, the arithmetic model explained above). This AI model is generated based on, for example, information (a type, priority, a delay budget, and the like) concerning data to be SL-transmitted and a communication environment (a congestion situation and radio quality) around the TxUE 40T and/or the RxUE 40R.

For example, a method of learning or inference of the AI model is explained below. First, specific examples of a procedure, parameters, a determination method, and the like of the SL resource selection control by the AI/ML are explained. For example, the TxUE 40T can execute at least a part of the procedure (e.g., steps A1 to A8) of the sidelink sensing explained above using the AI model. Note that at least a part of the specific examples of the procedure, the parameters, and the determination method of the SL resource selection control by the AI/ML explained below first may be carried out in combination with at least a part of the others.

### [Selection of an SL resource in the Selection window]

In step A8 of the procedure of the sidelink sensing explained above, the TxUE 40T selects the resource for the sidelink transmission at random from the resources remaining in the set S_{A}.

On the other hand, the TxUE 40T according to the present embodiment selects a resource using an AI model when selecting a resource for the sidelink transmission from the resources remaining in the set S_{A}. For example, the TxUE 40T according to the present embodiment inputs, for example, information concerning the resources remaining in the set S_{A} to an AI model (hereinafter also referred to as first AI model) for selecting a resource and uses, as a resource for the sidelink transmission, a resource obtained as an output.

The TxUE 40T selects the SL resource from the set S_{A} (the Selection window) using the AI model as explained above. Therefore, the TxUE 40T is capable of selecting an SL resource with a low possibility of collision.

Note that, in step A8, as a specific example, the physical layer in the TxUE 40T reports the set S_{A} to the upper layers (including the MAC layer) and the MAC layer in the TxUE 40T selects a resource at random for the sidelink transmission from the resources remaining in the set S_{A}. Thus, in the TxUE 40T in the present embodiment, the physical layer in the TxUE 40T may select an SL resource from the set S_{A} (the Selection window) using the AI model in step A8 after step A7 and report the SL resource to the upper layers (including the MAC layer). Further or alternatively, in the TxUE 40T in the present embodiment, after receiving the set S_{A} report from the physical layer of the TxUE 40T in step A8, the MAC layer in the TxUE 40T may select an SL resource from the set S_{A} (the Selection window) using the AI model.

### [Selection of a resource excluded from the set S_{A}]

In step A5 and/or step A6 of the procedure of the sidelink sensing explained above, the TxUE 40T excludes a resource satisfying some conditions from the set S_{A}.

On the other hand, the TxUE 40T according to the present embodiment excludes a resource using the AI model when excluding the resource from the set S_{A}. For example, the TxUE 40T according to the present embodiment inputs, for example, information concerning resources included in the set S_{A} to an AI model (hereinafter also referred to as second AI model) for excluding a resource and sets, as a resource excluded from the set S_{A}, a resource obtained as an output. Alternatively, the second AI model may output the set S_{A} after the resource is excluded.

For example, a slot in which the TxUE 40T has not performed sensing in step A5 explained above can be excluded from the set S_{A}. This is because the TxUE 40T does not have information concerning a use situation of the SL resource because the TxUE 40T did not perform sensing.

On the other hand, the TxUE 40T according to the present embodiment excludes a slot (a resource) from the set S_{A} using the second AI model. For that reason, the TxUE 40T can comprehensively determine whether to exclude, from the set S_{A}, slots including a slot (a resource) that has not been sensed.

Accordingly, the TxUE 40T can increase transmission opportunities while suppressing possibility of collision.

For example, in step A6 explained above, the TxUE 40T determines, based on comparison of a measured value of RSRP and a set threshold, an SL resource to be excluded.

On the other hand, the TxUE 40T according to the present embodiment can comprehensively determine resource to be excluded by determining a resource to be excluded from the set S_{A} using the second AI model.

Accordingly, the TxUE 40T can determine the resource to be excluded considering various factors such as a predicted future communication situation and a surrounding situation in addition to the RSRP and can more accurately select an SL resource.

Note that the second AI model may be an AI model that collectively performs processing in step A5 and step A6. Alternatively, different second AI models may be used in the steps; a second AI model (a 2-1-th AI model) for executing the processing of step A5, a second AI model (a 2-2-th AI model) for executing the processing of step A6.

### [Threshold of the RSRP]

In step A3 of the procedure of the sidelink sensing explained above, the TxUE 40T sets the RSRP threshold based on parameters (the RRC parameters and the RRC IE) notified from the base station 20.

On the other hand, the TxUE 40T according to the present embodiment sets the RSRP threshold using an AI model (hereinafter also described as third AI model) in addition to (or instead of) the RRC parameters. For example, the TxUE 40T inputs, for example, information concerning a surrounding environment of the own device to the third AI model and sets an output of the third AI model to the RSRP threshold.

The TxUE 40T can individually set the RSRP threshold for each of Sensing windows or for each of predetermined resources (for example, resources configured by one or more subchannels, resource blocks, subcarriers, slots, symbols, beams, and the like) in the Sensing window.

As explained above, the TxUE 40T sets the RSRP threshold using the AI model. Accordingly, the TxUE 40T can use the RSRP threshold in which a local communication environment around the TxUE 40T is reflected with a lower delay compared with when a value notified by the base station 20 is used and can perform more accurate resource selection control.

### [Setting of the Selection window]

In step A1 of the procedure of the sidelink sensing explained above, the TxUE 40T sets the Selection window. For example, the TxUE 40T sets start timing and end timing of the Selection window based on the RRC parameters.

On the other hand, the TxUE 40T according to the present embodiment sets the Selection window using an AI model (hereinafter also described as a fourth AI model). For example, the TxUE 40T sets at least one of the start timing and the end timing of the Selection window using the fourth AI model.

For example, in step A1 of the sidelink sensing explained above, the TxUE 40T uniquely selects the start timing (e.g., T₁) and the end timing (e.g., T₂) of the Selection window respectively from predetermined ranges. In the present embodiment, the TxUE 40T performs this selection using the fourth AI model. For example, the TxUE 40T inputs, for example, information concerning a surrounding environment of the own device to the fourth AI model and sets an output of the fourth AI model as the Selection window.

As explained above, the TxUE 40T sets at least one of the start timing and the end timing of the Selection window using the fourth AI model from the predetermined ranges set as in the related art based on the RRC parameters and the like.

Note that the fourth AI model may be an AI model that outputs both the start timing and the end timing of the Selection window. Alternatively, different fourth AI models may be used for the setting of the timings; a fourth AI model (a 4-1-th AI model) for setting the start timing and a fourth AI model (a 4-2-th AI model) for setting the end timing.

For example, in step A1 of the sidelink sensing explained above, the TxUE 40T sets minimum values and maximum values of the predetermined ranges based on predetermined values or the RRC parameters. On the other hand, in the present embodiment, the TxUE 40T can set minimum values, maximum values, and predetermined values (e.g., T_{proc, 1}, T₂ₘᵢₙ, pluralities of candidate slots Y and Yₘᵢₙ, pluralities of candidate slots Y', Y'ₘᵢₙ, and Mₜₒₜₐₗ) in the predetermined ranges using an AI model (hereinafter, fifth AI model). For example, the TxUE 40T inputs, for example, information concerning a surrounding environment of the own device and information concerning a sidelink in the past to the fifth AI model and sets an output of the fifth AI model as minimum values, maximum values, and predetermined values in the predetermined ranges.

Note that the fifth AI model may be an AI model that outputs both of the minimum values and the maximum values in the predetermined ranges. Alternatively, different fifth AI models may be used for the setting of the values; a fifth AI model (a 5-1-th AI model) for setting the minimum values and a fifth AI model (a 5-2-th AI model) for setting the maximum values

By using the AI model (for example, the fourth and fifth AI models) for the setting of the Selection window as explained above, the TxUE 40T can set the Selection window considering various factors and can set a more suitable Selection window.

### [Setting of the Sensing window]

In step A2 of the procedure of the sidelink sensing explained above, the TxUE 40T sets the Sensing window. For example, the TxUE 40T sets start timing (e.g., T₀) and end timing (e.g., T_{proc,0} or T_{proc,0}^{SL}) of the Sensing window based on the RRC parameters.

On the other hand, the TxUE 40T according to the present embodiment sets the Sensing window using an AI model (hereinafter also described as a sixth AI model). For example, the TxUE 40T sets at least one of the start timing and the end timing of the Sensing window using the sixth AI model.

For example, in step A2 of the sidelink sensing explained above, the TxUE 40T sets the start timing of the Sensing window to 100 ms or 1100 ms. In the present embodiment, the TxUE 40T performs this setting using the sixth AI model. For example, the TxUE 40T inputs, for example, information concerning a surrounding environment of the own device to the sixth AI model and sets an output of the sixth AI model as the Sensing window. The TxUE 40T sets the end timing of the Sensing window in the same manner.

Note that the sixth AI model may be an AI model that outputs both of the start timing and the end timing of the Sensing window. Alternatively, different sixth AI models may be used for the setting of the timings; a sixth AI model (a 6-1-th AI model) for setting the start timing and a sixth AI model (a 6-2-th AI model) for setting the end timing.

By using the sixth AI model for the setting of the Sensing window as explained above, the TxUE 40T can flexibly set the Sensing window considering various factors and can set a more suitable Sensing window.

By suitably setting a window (that is, a time interval) that should be considered in the sidelink sensing as explained above, the TxUE 40T can set a window having a less wasteful length while maintaining length in which a resource with a low possibility of collision can be selected. Accordingly, the TxUE 40T can reduce complexity of control of the sidelink sensing and reduce power consumption.

### [Resetting of the RSRP Threshold]

In step A7 of the procedure of the sidelink sensing explained above, when the number of resources remaining in the set S_{A} is smaller than a predetermined number, the TxUE 40T increases the value of the RSRP threshold in order to ensure the number of resources of the set S_{A} at the predetermined number.

In the present embodiment, the TxUE 40T executes the processing of step A7 using an AI model (hereinafter referred to as a seventh AI model). For example, the TxUE 40T determines, using the seventh AI model, whether to increase the value of the RSRP threshold.

For example, the TxUE 40T inputs, for example, information concerning the set S_{A} to the seventh AI model and determines, based on an output from the seventh AI model, whether to increase the value of the RSRP threshold. That is, the TxUE 40T determines, using the seventh AI model, whether to reselect the set S_{A}.

For that reason, even when the number of resources remaining in the set SA is smaller than the predetermined number, the TxUE 40T does not perform the reselection of the set S_{A} depending on output of the seventh AI mode and selects the SL resource from the set S_{A}.

As explained above, the TxUE 40T determines, using the seventh AI model, whether to reselect the set S_{A}. Accordingly, the TxUE 40T can determine whether to reselect the set S_{A} without determining whether the number of resources remaining in the set S_{A} is less than the predetermined number.

The TxUE 40T may determine, using an AI model (hereinafter also described as eighth AI model), an increase amount of the RSRP threshold in the case of determining to reselect the set S_{A}. In step A7 of the procedure of the sidelink sensing explained above, the increase amount of the RSRP threshold is a fixed value of 3dB. However, in the present embodiment, the TxUE 40T flexibly determines the increase amount of the RSRP threshold using the eighth AI model. For example, the TxUE 40T inputs, for example, information concerning the set S_{A} and information concerning a surrounding environment to the eighth AI model and sets an output as the increase amount of the RSRP threshold.

As explained above, by using the AI model (for example, the seventh and eighth AI models), the TxUE 40T can flexibly determine necessity of the reselection of the set S_{A} and the increase amount of the RSRP threshold considering various factors and can perform more suitable SL resource selection.

Note that, here, the TxUE 40T performs both of the determination of the necessity of the reselection of the set S_{A} and the determination of the increase amount of the RSRP threshold using the AI mode. However, processing performed by the TxUE 40T using the AI model is not limited to both of the determinations. For example, the TxUE 40T may perform one of the determination of the necessity of the reselection of the set S_{A} and the determination of the increase amount of the RSRP threshold using the AI model. In this case, the TxUE 40T performs the other processing using a specified value (for example, the predetermined number or 3dB explained above).

Here, the TxUE 40T uses the different AI models respectively for the determination of the necessity of the reselection of the set S_{A} and the determination of the increase amount of the RSRP threshold. However, both of the kinds of processing may be executed by one AI model. For example, in the case of performing the reselection of the set S_{A}, the TxUE 40T can execute both of the determination of the necessity of the reselection of the set S_{A} and the determination of the increase amount of the RSRP threshold using one AI model by using an AI model that outputs the increase amount of the RSRP threshold.

### [SL resource selection control at the time of the Partial sensing]

In the Partial sensing of the related art explained above, the TxUE 40T performs a part of sensing in order to reduce power consumption by the sensing and excludes, from the SL resource selection, a section (a slot) in which sensing has not been performed.

On the other hand, the TxUE 40T according to the present embodiment comprehensively performs the SL resource selection considering various factors including a section (a slot) in which sensing has not been performed. Accordingly, the TxUE 40T can increase opportunities of the sidelink transmission while reducing power consumption.

For example, the TxUE 40T performs the SL resource selection using an AI model (hereinafter also described as ninth AI model) to perform the SL resource selection including a section in which sensing has not been performed. For example, the TxUE 40T inputs, to the ninth AI model, for example, information concerning a section in which sensing has been performed and selects a resource based on an output from the ninth AI model. In this way, the TxUE 40T can estimate and predict, based on the section in which sensing has been performed, a sensing result of the section in which sensing has not been performed.

Note that the TxUE 40T may distinguish the section in which sensing has been performed and the section in which sensing has not been performed and perform the SL resource selection. For example, the TxUE 40T can preferentially select, as an SL resource, the section in which sensing has been performed.

Note that, in the Partial sensing in the present embodiment, when the TxUE 40T has a result of sensing performed in the past (for example, before a maximum value (such as 100 ms or 1100 ms) that can be set for the Sensing window or the like) even in a section in which the resource sensing has not been performed at the time of the resource selection, the TxUE 40T may input the result to the ninth AI model and select an SL resource.

### [SL resource selection control at the time of the Random selection]

In the Random selection of the related art explained above, the TxUE 40T does not perform SL sensing and selects an SL resource at random from the predetermined resource (the Selection window).

On the other hand, in the present embodiment, the TxUE 40T selects an SL resource from the predetermined resources using an AI model (hereinafter also described as tenth AI model). For example, the TxUE 40T inputs, for example, information concerning a predetermined resource to the tenth AI model and selects an SL resource based on an output from the tenth AI model.

For example, when the TxUE 40T has a capability of receiving control information and data from the base station 20 and/or another UE 40, the TxUE 40T performs the SL resource selection using the tenth AI model transmitted from the base station 20 and/or the other UE 40. Alternatively, when the base station 20 and/or the other UE 40 transmits information necessary for generating the tenth AI model, the TxUE 40T generates the tenth AI model based on the information and performs the SL resource selection using the generated tenth AI model.

Note that, for example, when the TxUE 40T does not have the capability of receiving control information and data from the base station 20 and/or the other UE 40, the tenth AI model or the information necessary for generating the tenth AI model can be pre-configured in the TxUE 40T.

Note that, in the Random selection in the present embodiment, even when resource sensing at the time of resource selection is not performed, when the TxUE 40T has a result of sensing performed in the past (before, for example, a maximum value (such as 100 ms or 1100 ms) that can be set for the Sensing window), the TxUE 40T may input the result to the tenth AI model and select an SL resource.

A method (hereinafter also described as first SL resource selection method) of using the AI/ML (for example, the first to tenth AI models) for a part of the processing procedure of the existing sidelink sensing is explained above.

Note that the TxUE 40T can select an SL resource using a method different from this method (hereinafter also described as second SL resource selection method). For example, the TxUE 40T may select an SL resource with the AI/ML using all or a part of the parameters concerning the existing sidelink sensing. For example, the TxUE 40T inputs parameters concerning the sidelink sensing (for example, all parameters used in the processing procedure of the sidelink sensing of the related art) and the like to one AI model (hereinafter also described as eleventh AI model). The TxUE 40T selects one or more SL resources based on an output from the eleventh AI model.

As explained above, in the first SL resource selection method, the TxUE 40T can select an SL resource by applying the AI model (for example, the first to tenth AI models) to a part of the processing procedure of the sidelink sensing. In the second SL resource selection method, the TxUE 40T can select an SL resource using the AI model (for example, the eleventh AI model) without performing the processing procedure of the sidelink sensing explained above.

In the following explanation, an SL resource selection method by the processing procedure of the sidelink sensing of the related art not using an AI model is also referred to as SL resource selection mode 1. A method (a second SL resource selection method) of selecting an SL resource using an AI model without performing the processing procedure of the sidelink sensing is also referred to as SL resource selection mode 2. An SL resource selection method (a first SL resource selection method) using an AI model in a part of the processing procedure of the sidelink sensing is also referred to as SL resource selection mode 3.

Examples of differences between the SL resource selection mode 1 and the SL resource selection mode 2 include whether the Sensing window is set, whether the Selection window is set, and whether resource exclusion processing from the set S_{A} is performed (whether the set S_{A} is set).

Note that, as opposed to the conventional SL resource selection method by the sidelink sensing not using an AI model (the SL resource selection mode 1), the SL resource selection method (the first and second resource selection methods) using an AI model may be set to the SL resource selection mode 2. In this case, the SL resource selection mode 2 includes the first SL resource selection method using an AI model for a part of the processing procedure of the sidelink sensing and the second SL resource selection method for implementing the entire processing procedure with an AI model.

Which SL resource selection mode among the SL resource selection mode 1, the SL resource selection mode 2, and the SL resource selection mode 3 is used by the TxUE 40T may be configured by an RRC message transmitted from the base station 20 to the TxUE 40T. That is, a parameter (RRC IE) indicating which SL resource selection mode among the SL resource selection mode 1, the SL resource selection mode 2, and the SL resource selection mode 3 is used by the TxUE 40T may be included in the RRC message.

Further or alternatively, a UE capability indicating which SL resource selection mode among the SL resource selection mode 1, the SL resource selection mode 2, and the SL resource selection mode 3 is supported may be defined anew. The TxUE 40T may report the UE capability to the base station 20 with a UE Capability Information message.

### <3.2. Control method in an SL utilizing the AI/ML>

Although the control method concerning the SL resource selection using the AI model is explained above, the AI model can be applied to various controls such as SL transmission and SL reception other than the SL resource selection. An example of applying the AI model to other than the SL resource selection is explained below.

### [Control concerning IUC transmission]

For example, the AI model can be applied to control concerning IUC transmission by the UE 40A that transmits an IUC.

In the related art, a trigger of the IUC transmission is whether a predetermined condition (a trigger condition) is satisfied. The UE 40A performs the IUC transmission when the predetermined condition is satisfied. This predetermined condition is set based on the RRC parameters transmitted from the base station 20.

In the present embodiment, the UE 40A determines the IUC transmission using an AI model (hereinafter also described as twelfth AI model). The UE 40A inputs, for example, information used for determining the IUC transmission to the twelfth AI model and determines, based on an output from the twelfth AI model, whether to perform the IUC transmission.

Alternatively, the UE 40A may set a predetermined condition (a trigger condition) using an AI model (hereinafter also described as thirteenth AI model). In this case, the UE 40A sets the trigger condition using the thirteenth AI model in addition to (or instead of) the RRC parameters transmitted from the base station 20. For example, the UE 40AI inputs information such as the RRC parameters to the thirteenth AI model and sets a trigger condition (for example, a threshold of an RSRP value) according to an output from the thirteenth AI model.

### [Determination of content (coordination information) of the IUC]

In the related art, the coordination information transmitted from the UE 40A to the UE 40B (the TxUE 40T) is set based on the RRC parameters. However, in an environment in which a communication situation dynamically changes, it is highly likely that suitable coordination information is different (changes).

Therefore, in the present embodiment, the UE 40A determines coordination information using an AI model (hereinafter also described as fourteenth AI model). For example, the UE 40A inputs information such as a communication situation to the fourteenth AI model and determines coordination information based on an output from the fourteenth AI model.

Accordingly, the UE 40A can determine coordination information considering various factors.

### <3.3. Processing procedure>

In the following explanation, an example of a processing procedure for utilizing an AI model in the TxUE 40T is explained. Here, the processing procedure is explained for each node that generates an AI model (for example, a node that performs learning of the AI model or a node that holds information necessary for the learning of the AI model).

### <3.3.1. Case in which the base station generates an AI model>

Here, a case in which the base station 20 generates an AI model and transmits the generated AI model to the TxUE 40T is explained. Note that, when the base station 20 here is a 5G base station, the base station 20 may be a gNB-CU or may be a gNB-DU. The base station 20 here may be an external device (e.g., a core network node) connected to the base station 20. In this case, the generated AI model is provided to the base station 20 (the gNB-CU or the gNB-DU).

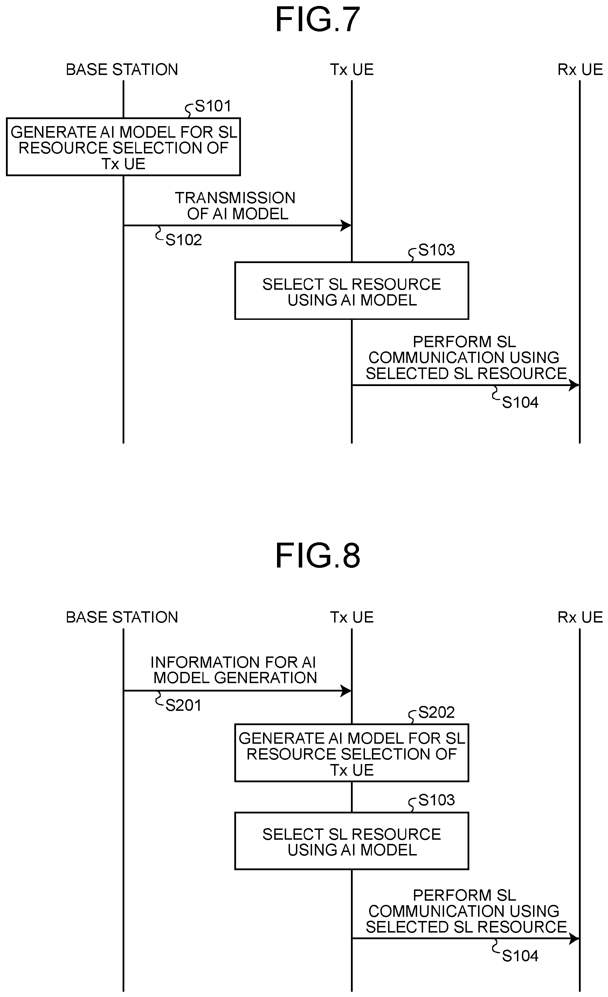

FIG. 7 is a sequence diagram illustrating an example of a flow of a processing procedure of the sidelink communication according to the embodiment of the present disclosure. Here, the TxUE 40T selects an SL resource using an AI model transmitted from the base station 20 and performs SL transmission to the RxUE 40R.

As illustrated in FIG. 7, the base station 20 first generates an AI model for SL resource selection of the TxUE 40T (Step S101). Subsequently, the base station 20 transmits the AI model to the TxUE 40T (Step S102).

The TxUE 40T selects the SL resource using the AI model (Step S103). The TxUE 40T performs SL communication with the RxUE 40R using the selected SL resource (Step S104).

Here, in Step S101, the base station 20 can generate AI models in the following cases A to D according to situations.
A: An AI model for a predetermined TxUE 40T to perform the SL transmission to predetermined RxUE 40R
B: An AI model for the predetermined TxUE 40T to perform the SL transmission to any RxUE 40R
C: An AI model for any TxUE 40T to perform the SL transmission to the predetermined RxUE 40R
D: An AI model for any TxUE 40T to perform the SL transmission to any RxUE 40R

### (Case A)

The AI model in this case is a model suitable for SL transmission from the predetermined TxUE 40T to the predetermined RxUE 40R. That is, the AI model in this case is an individual AI model for each SL transmission. The base station 20 can transmit the AI model individually for each TxUE 40T.

This AI model is learned and/or inferred based on information and/or data concerning the predetermined TxUE 40T and the predetermined RxUE 40R.

It is assumed that the SL transmission is performed between the predetermined TxUE 40T and the predetermined RxUE 40R, that is, the SL transmission is also performed from the RxUE 40R to the TxUE 40T (in other words, the predetermined RxUE 40R also operates as the predetermined TxUE 40T and the predetermined TxUE 40T also operates as the predetermined RxUE 40R). In this case, the base station 20 can also transmit the AI model to the RxUE 40R.

### (Case B)

The AI model in this case is a model suitable for the SL transmission from the predetermined TxUE 40T to any RxUE 40R. That is, the AI model in this case is an AI model specific to the predetermined TxUE 40T. The base station 20 can transmit the AI model individually for each predetermined TxUE 40T.

This AI model is learned and/or inferred based on information and/or data concerning the predetermined TxUE 40T.

### (Case C)

The AI model in this case is a model suitable for the SL transmission from any TxUE 40T to the predetermined RxUE 40R. That is, the AI model in this case is an AI model specific to the predetermined RxUE 40R.

The base station 20 can transmit the AI model individually for each TxUE 40T that performs the SL transmission to the predetermined RxUE 40R. Alternatively, the base station 20 may broadcast the AI model or transmit the AI model to a predetermined UE group. Alternatively, the base station 20 may transmit the AI model to the TxUE 40T via the predetermined RxUE 40R.

Furthermore, this AI model is learned and/or inferred based on information and/or data concerning the predetermined RxUE 40R.

The TxUE 40T that uses this AI model may be limited. For example, the TxUE 40T whose distance to the RxUE 40R is less than a predetermined value or the TxUE 40T located in a predetermined area may be able to perform SL transmission to the RxUE 40R using this AI model.

### (Case D)

The AI model in this case is a model suitable for the SL transmission from any TxUE 40T to any RxUE 40R. That is, the AI model in this case can be broadcast or transmitted to a predetermined UE group from the base station 20.

This AI model is learned and/or inferred based on information and/or data concerning various TxUEs 40T and various RxUEs 40R in the base station 20 that generate the AI model.

The TxUE 40T that uses this AI model may be limited. For example, the TxUE 40T connected to the base station 20 that has generated this AI model may be able to perform SL transmission to the RxUE 40R using this AI model. The RxUE 40R capable of receiving the SL transmission using the AI model may also be limited to the RxUE 40R connected to the base station 20 that has generated the AI model.

Note that, in the cases A to D, it is assumed that the SL transmission is performed between the TxUE 40T and the RxUE 40R, that is, the SL transmission is also performed from the RxUE 40R to the TxUE 40T (in other words, the RxUE 40R also operates as the TxUE 40T and the TxUE 40T also operates as the RxUE 40R). In this case, the TxUE 40T explained above may be replaced with the RxUE 40R and the RxUE 40R may be replaced with the TxUE 40T.

The base station 20 can periodically or aperiodically acquire information necessary for generating (learning) an AI model from at least one of the TxUE 40T, the RxUE 40R, and another UE 40. In this case, the base station 20 can acquire information necessary for generating (learning) an AI model via, for example, an uplink channel (a PUCCH and/or a PUSCH).

Note that, here, it is assumed that the base station 20 generates and transmits an AI model. However, another UE 40 may generate and transmit an AI model. In this case, here, it is assumed that the processing and the like performed by the base station 20 is performed by the other UE 40. It is assumed that information necessary for generating (learning) an AI model is transmitted not by the uplink channel but by a sidelink channel (a PSFCH, a PSCCH and/or a PSSCH).

### <3.3.2. Case in which the TxUE generates an AI model>

Subsequently, a case in which the TxUE 40T generates an AI model is explained.

FIG. 8 is a sequence diagram illustrating another example of the flow of the processing procedure of the sidelink communication according to the embodiment of the present disclosure. Here, the TxUE 40T generates an AI model using information transmitted from the base station 20, selects an SL resource, and performs SL transmission to the RxUE 40R.

As illustrated in FIG. 8, the TxUE 40T receives information for AI model generation from the base station 20 (Step S201). Here, the information for AI model generation includes, for example, learning data and control information concerning the AI model generation.

Subsequently, the TxUE 40T generates an AI model for SL resource selection of the TxUE 40T using the received information for the AI model generation (Step S202). Note that, since the subsequent processing is the same as the processing illustrated in FIG. 7, the same reference signs are added and explanation of the processing is omitted.

This AI model is a model specific to the TxUE 40T that generates an AI model. Furthermore, this AI model may be a model specific to the predetermined RxUE 40R (that is, an AI model specific to SL transmission from the TxUE 40T that generates the AI model to the predetermined RxUE 40R). Alternatively, this AI model may be a model used for SL transmission to any RxUE 40R (that is, an AI model used for SL transmission from the TxUE 40T that generates the AI model to any RxUE 40R).

The TxUE 40T can periodically or aperiodically acquire information necessary for generating (learning) an AI model from the base station 20. In this case, the TxUE 40T can acquire the information necessary for generating (learning) an AI model from the base station 20 via a downlink channel (a PDCCH and/or a PDSCH).

Note that, here, it is assumed that the TxUE 40T acquires the information necessary for generating (learning) an AI model from the base station 20. However, the TxUE 40T may acquire the information necessary for generating (learning) an AI model from the RxUE 40R or another UE 40. In this case, the TxUE 40T acquires the information necessary for generation (learning) of an AI model via a sidelink channel (a PSCCH and/or a PSSCH).

### <3.3.3. Case in which the RxUE generates an AI model>

Subsequently, a case in which the RxUE 40R generates an AI model is explained.

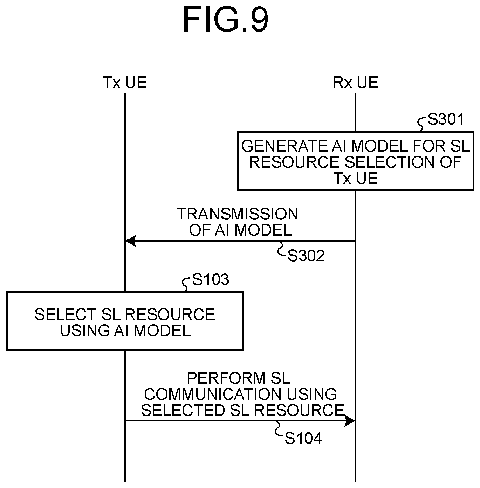

FIG. 9 is a sequence diagram illustrating another example of the flow of the processing procedure of the sidelink communication according to the embodiment of the present disclosure. Here, the RxUE 40R generates an AI model and transmits the AI model to the TxUE 40T.

As illustrated in FIG. 9, the RxUE 40R generates an AI model for SL resource selection of the TxUE 40T (Step S301).

Subsequently, the RxUE 40R transmits the generated AI model to the TxUE 40T (Step S302).

Note that, since the subsequent processing is the same as the processing illustrated in FIG. 7, the same reference signs are added and explanation of the processing is omitted.

This AI model can be a model specific to the RxUE 40R that generates the AI model. Furthermore, this AI model may be a model specific to the predetermined TxUE 40T (that is, an AI model specific to SL transmission from the predetermined TxUE 40T to the RxUE 40R that generates the AI model). Alternatively, this AI model may be a model used for SL transmission from any TxUE 40T (that is, an AI model used for SL transmission from any TxUE 40T to the RxUE 40R that generates the AI model).

The RxUE 40R may periodically or aperiodically acquire information necessary for generating (learning) an AI model from the base station 20. In this case, the RxUE 40R can obtain the information necessary for generating (learning) an AI model from the base station 20 via a downlink channel (a PDCCH and/or a PDSCH).

Alternatively, the RxUE 40R may acquire the information necessary for generation (learning) of an AI model from the TxUE 40T or another UE 40. In this case, the RxUE 40R acquires information necessary for generating (learning) an AI model via a sidelink channel (a PSCCH and/or a PSSCH).

### <3.4. Transmission method for an AI model>

As explained above, when an AI model is created in a node other than the TxUE 40T, model information concerning the AI model can be transmitted to the TxUE 40T. A transmission source of the model information concerning the AI model may be the base station 20, may be the RxUE 40R, or may be another UE. In the following explanation, a transmission method for an AI model is explained with examples. Note that, here, a method of transmitting an AI model is mainly explained. Since a method of receiving an AI model is a procedure (an operation) opposite to that of the transmission method, detailed explanation of the method is omitted. Note that, when the base station 20 here is a 5G base station, the base station 20 may be a gNB-CU or may be a gNB-DU. The base station 20 here may be an external device (e.g., a core network node) connected to the base station 20. In this case, model information concerning a generated AI model is provided to the base station 20 (the gNB-CU or the gNB-DU).

### <3.4.1. First transmission method>

In a first transmission method, all information (hereinafter also described as model all information) necessary for using (inferring) an AI model is transmitted in a predetermined layer. That is, data itself of the AI model is explicitly or directly transmitted.

For example, the predetermined layer in the first transmission method is a layer higher than the predetermined layer in a second transmission method explained below, such as an application layer or an RRC layer.

In the first transmission method, an amount of information to be transmitted (a data amount, a payload size) increases. However, the TxUE 40T can use an optimal AI model in SL resource selection control and is capable of performing more accurate inference by AI (selection of an SL resource).

The first transmission method is suitable, for example, in the following cases.
A case in which a first transmission method (or a first reception method corresponding to the first transmission method) is instructed by control information of an RRC layer or the like
A case in which an AI model is transmitted after first SL communication link establishment between the TxUE 40T and the RxUE 40R
A case in which an AI model transmitted or broadcasted to a plurality of UEs 40
A case in which an AI model is retransmitted (reconstructed) after restoration from a connection abnormality (a Link failure)
A case in which communication with a high request for reliability and the like to communication is performed (for example, when communication is performed with predetermined QoS (for example, 5QI))
A case in which model all information is transmitted from the base station 20 (using a Uu link or a downlink)

### <3.4.2. Second transmission method>

A second transmission method is an example suitable when a plurality of AI models are held (stored) or set in the TxUE 40T in advance or set. In this case, information (hereinafter also referred to as designation information) indicating any one of the AI models is transmitted in a predetermined layer. The designation information includes, for example, information indicating an AI model to be enabled (activated or used for inference) among the plurality of AI models. Specifically, the designation information is, for example, information (for example, an AI model ID) for identifying the AI model.

It is assumed that the plurality of AI models are transmitted to the TxUE 40T in advance using the first transmission method, a third transmission method, and the like.

The predetermined layer in the second transmission method is a layer lower than the predetermined layer in the first transmission method, such as a physical layer, a MAC layer, and an RRC layer.

For example, the base station 20 can notify the designation information through to the TxUE 40T through PDCCH/PDSCH, MIB/SIB, Dedicated RRC signaling, or the like. The UE 40 can notify the designation information to the TxUE 40T through, for example, PSCCH/PSSCH/PSFCH, IUC, Sidelink RRC signaling, or the like.

In the second transmission method, an amount of information to be transmitted (a data amount, a payload size) is extremely small compared with the first transmission method. When the designation information is transmitted in the lower layer explained above, the TxUE 40T can set (switch or change) an AI model in a short time. For that reason, the second transmission method is suitable for communication with a low delay.

The second transmission method is suitable, for example, in the following cases.

A case in which the second transmission method (or a second reception method corresponding to the second transmission method) is instructed by control information of an RRC layer or the like

A case in which communication with a high request such as a delay in communication is performed (for example, when communication is performed with predetermined QoS (for example, 5QI))

A case in which instruction information is transmitted from the UE 40 (using a sidelink or the PC 5)

### <3.4.3. Third transmission method>

In a third transmission method, information (hereinafter also described as difference information) of an update (a difference) from an AI model held (set or stored) in advance in the TxUE 40T is transmitted in a predetermined layer. That is, the third transmission method is a method of updating a part of the AI model already held in the TxUE 40T.

Note that the AI model is assumed to be held in the TxUE 40T in advance using, for example, the first transmission method or the like.

Here, in order to simplify the explanation, it is assumed that an AI model be a target of update is already held in the TxUE 40T. However, the AI model to be the target of update is not limited to the AI model held in the TxUE 40T.

For example, an AI model transmitted and broadcast from the base station 20 or the UE 40 to the plurality of UEs 40 may be the target of update. For example, an update (a change) specific to a predetermined TxUE 40T can be performed on this AI model that any TxUE 40T can use.

Accordingly, the predetermined TxUE 40T can update (change) an AI model for any TxUE 40T to an AI model specific to the own device. Since an amount of information necessary for update is smaller than an amount of information for transmitting the AI model itself, the TxUE 40T can acquire the AI model specific to the own device without increasing a communication amount of an entire network.

For example, the predetermined layer in the third transmission method is the upper layer explained in the first transmission method or the lower layer explained in the second transmission method. The predetermined layer can be changed according to an information amount of the difference information and a requested delay time.

For example, when the information amount of the difference information exceeds a predetermined value (or is equal to or larger than the predetermined value), the difference information is transmitted in an upper layer (for example, an application layer). When the information amount is equal to or smaller than the predetermined value (or is smaller than the predetermined value), the difference information is transmitted in a lower layer (for example, an RRC layer).

For example, when the requested delay time exceeds a predetermined value (or is equal to or larger than the predetermined value), the difference information is transmitted in an upper layer (for example, an application layer). When the requested delay time is equal to or smaller than the predetermined value (or is smaller than the predetermined value), the difference information is transmitted in a lower layer (for example, an RRC layer).

The difference information transmitted by the third transmission method has an information amount smaller than the information amount of the model information transmitted by the first transmission method. Furthermore, with the third transmission method, as in the first transmission method, the TxUE 40T can use a more optimal AI model when selecting an SL resource by utilizing AI and can more accurately perform SL resource selection using inference by AI.

For example, the third transmission method is suitable in the following cases.
A case in which the third transmission method (or a third reception method corresponding to the third transmission method) is instructed by control information of a RRC layer or the like
A case in which the TxUE 40T already holds an AI model
A case in which update of an AI model is smaller than a predetermined information amount

### <3.5. Transmission condition of an AI model>

The transmission of an AI model explained above can be performed based on the following predetermined condition.

### (A case in which an AI model is periodically transmitted)

A period of transmission (or update) of an AI model is set by signaling of an RRC layer (e.g., an RRC message transmitted from the base station 20 to the UE (the TxUE 40T)) and the transmission (or the update) of the AI model is performed based on the period. Note that, when the transmission (or the update) of the AI model is not performed, the transmission can be skipped (canceled).

### A case in which an AI model is aperiodically transmitted)

In this case, an AI model may be transmitted based on a predetermined trigger. For example, when a condition (a trigger condition) specified or set in advance is satisfied, transmission (or update) of the AI model is performed.

For example, the trigger condition is one of the following conditions or a combination the following conditions.
Detection of deterioration in communication quality
Movement of the UE 40 that transmits the AI model and/or the UE 40 that receives the AI model

When the detection of degradation in communication quality is the trigger condition, for example, detecting that reception power (RSRP) of the TxUE 40T is equal to or smaller than a predetermined value is a trigger of transmission (or update) of the AI model. Detecting that the number of times of retransmission of SL transmission is equal to or larger than a predetermined number of times may be a trigger. Detecting that the number of times the TxUE 40T has received Nack is equal to or larger than a predetermined number of times may be a trigger.

When the movement of the UE 40 explained above is set as a trigger condition, detection of the movement can be performed based on whether a moving distance is equal to or larger than a predetermined value, entrance and exit of the UE 40 in and from a predetermined area, a change (handover) of the base station 20 to which the UE 40 is connected, a change of a cell that should be subjected to Camp on by Cell Selection/Reselection, and the like.

### <3.6. Switching of an SL resource selection mode>

The TxUE 40T can switch the SL resource selection mode explained above and perform selection control for a SL resource. For example, the TxUE 40T can switch the SL resource selection mode 1 of the related art in which an AI model is not used and the SL resource selection mode 2 and/or the SL resource selection mode 3 in which an AI model is used and select an SL resource.

Accordingly, the TxUE 40T can communicate with the UE 40 or the base station 20 that does not support the SL resource selection method (the SL resource selection modes 2 and 3) of the present embodiment and can consider backward compatibility.

The UE 40 supporting the SL resource selection method (the SL resource selection modes 2 and 3) of the present embodiment identifies whether the UE 40 to be a communication partner supports the SL resource selection method (the SL resource selection modes 2 and 3) of the present embodiment. This identification is performed based on UE capability and control information of the UE 40 to be the communication partner, setting and control information from the base station 20, and the like.

When the UE 40 to be the communication partner supports the SL resource selection method (the SL resource selection modes 2 and 3) of the present embodiment, the UE 40 and the UE 40 to be the communication partner perform SL communication using the SL resource selection method (the SL resource selection modes 2 and 3) of the present embodiment.

On the other hand, when the UE 40 to be the communication partner does not support the SL resource selection method (the SL resource selection modes 2 and 3) of the present embodiment, the UE 40 and the UE 40 to be the communication partner perform SL communication using the SL resource selection method (the SL resource selection mode 1) of the related art.

Alternatively, the TxUE 40T may determine, based on RRC signaling of the base station 20, whether to use the SL resource selection method (the SL resource selection modes 2 and 3) of the present embodiment.

When the SL resource selection method (the SL resource selection modes 2 and 3) of the present embodiment is notified or set by the base station 20, the TxUE 40T performs the SL resource selection control using the notified or set SL resource selection mode.

On the other hand, when the SL resource selection method (the SL resource selection modes 2 and 3) of the present embodiment is not notified or set by the base station 20, the TxUE 40T performs the SL resource selection control using the SL resource selection mode 1.

Alternatively, the TxUE 40T may autonomously determine which SL resource selection mode the TxUE 40T uses. In this case, the TxUE 40T may determine an SL resource selection mode regardless of whether the base station 20 and the RxUE 40R support the SL resource selection method (the SL resource selection modes 2 and 3) of the present embodiment.

When determining that the own device supports the SL resource selection method (the SL resource selection modes 2 and 3) of the present embodiment and executes the SL resource selection method (the SL resource selection modes 2 and 3), the TxUE 40T performs the SL resource selection control using this SL resource selection method.

Whether the TxUE 40T can autonomously determine an SL resource selection method may be set by the base station 20 or may bet in advance. In this case, when the own device is set to be able to autonomously determine an SL resource selection method, the TxUE 40T can autonomously set use of the SL resource selection method (the SL resource selection modes 2 and 3) of the present embodiment.

### <3.7. Information used for learning and inference of an AI model>

### [Learning information]

An example of information (hereinafter also described as learning information) necessary for learning and inference of an AI model according to the present embodiment is explained below. At least one of the base station 20(or another UE 40), the TxUE 40T, and the RxUE 40R performs generation (learning) and/or inference of an AI model explained above using at least one of kinds of learning information explained below. As explained above, the TxUE 40T performs the SL resource selection control using an AI model.

At least one of the kinds of learning information explained below can be transmitted by at least one of the base station 20(or another UE 40), the TxUE 40T, and the RxUE 40R through at least one of a downlink channel, an uplink channel, and a sidelink channel.

Examples of the learning information include the following information.
Device information concerning the base station 20 or the UE 40
Position information concerning a position
Date and time information concerning a date and time
Environment information concerning a communication environment of the TxUE 40T and/or the RxUE 40R
Coordination information concerning inter UE coordination transmitted or received by the own UE 40 and/or the other UE 40
Transmission information concerning SL transmission in which SL sensing is performed
Past information of SL transmissions in the past
Sensor information acquired by a camera or a sensor
Future information concerning a future communication situation of the TxUE 40T and/or the RxUE 40R
Event information concerning an event or a performance in an area (a place) where communication is performed
Teacher data information concerning teacher data used when supervised learning of an AI model is performed

### (Device information concerning the base station 20 or the UE 40)

Device information concerning the base station 20 or the UE 40 can include, for example, at least one of kinds of information described below.
Device identification information for identifying the base station 20 or the UE 40
Antenna information concerning an antenna
Function information concerning functions and capabilities supported by wireless communication
Shape information concerning a shape and weight

The device identification information for identifying the base station 20 or the UE 40 can include, for example, a cell ID and an IMEI (MEI: International Mobile Equipment Identity).

The antenna information concerning an antenna can include, for example, information concerning an antenna configuration, a beam pattern, the number of antenna elements, and a configuration of the antenna elements.

Note that the device information can be, as information added to other information, information concerning the base station 20 or the UE 40 that has acquired, held, transmitted, and shared the other information. For example, when the TxUE 40T performs inference using an AI model, the TxUE 40T can perform the inference of an AI model using device information concerning the TxUE 40T or device information concerning the RxUE 40R.

### (Position information concerning a position)

The position information can include, for example, at least one of kinds of information described below.
Absolute position information based on absolute position information (for example, latitude and longitude)
Relative position information based on relative position information (for example, a zone ID)
Communication environment information concerning a communication environment (outdoor, indoor, urban, suburban, in an office, in a factory, and on a road)

Note that the position information can be, as information added to other information, information concerning a position where the other information was acquired, held, transmitted, or shared. For example, when the TxUE 40T performs inference using an AI model, the TxUE 40T may perform the inference of an AI model using the position information concerning the TxUE 40T or the position information concerning the RxUE 40R.

### (Date and time information concerning a date and time)

The date and time information can include, for example, at least one of kinds of information described below.
Information concerning time and a time period
Information concerning a date, a day of week, and whether a day is a holiday
Information concerning a month, a year, a season

Note that the date and time information can be, as information added to other information, information concerning a date and time when the other information was acquired, held, transmitted, or shared. For example, when the TxUE 40T performs inference using an AI model, the TxUE 40T can perform the inference of an AI model using date and time information concerning a date and time when SL transmission is performed (for example, a date and time including a Selection window and a date and time including a Sensing window).

### (Environment information concerning a communication environment of the TxUE 40T and/or the RxUE 40R)

The environment information can include, for example, at least one of kinds of information described below.
Map information around the TxUE 40T and/or the RxUE 40R
Structure information around the TxUE 40T and/or the RxUE 40R

Here, the structure information includes information concerning an object having some influence on radio wave propagation such as reflection, diffraction, and transmission. For example, the structure includes an edifice, a wall surface, a tree planting, a road, a signboard, a traffic light, a road sign, a pillar, a building, a ground, glass, a window, a desk, and a cabinet. The structure information includes a position, a shape, a size, and a material of the structure and parameters (a dielectric constant, a conductivity, and the like) relating to radio wave propagation in the structure.

The structure information can be generated and constructed based on map information or the like. Alternatively, the structure information may be generated/constructed based on information acquired from a camera, a sensor (an image sensor, a photoelectric sensor, an ultrasound sensor, or the like), or the like.

### (Coordination information)

Coordination information concerning inter UE coordination transmitted or received by the own UE 40 and/or another UE 40 can include an IUC scheme and coordination information.

An IUC has been control information used when the UE 40B selects an SL resource. However, in the present embodiment, an IUC for the UE 40B can be used for learning and inference of an AI model used by the UE 40 other than the UE 40B. Accordingly, the UE 40 other than the UE 40B can perform the SL resource selection with higher accuracy.

### (Transmission information concerning SL transmission in which SL sensing is performed)

The transmission information can include, for example, at least one of kinds of information described below.
Information concerning a payload size (the number of bits and the number of bytes)
Resource information concerning a resource amount necessary for SL transmission
Traffic information concerning traffic
Delay information concerning an allowable delay (Delay budget)
Type information (use case information) concerning a type of data (a use case)
Priority information concerning priority

The resource information concerning a resource amount necessary for SL transmission includes, for example, information concerning the number of resource blocks, the number of subchannels, the number of slots, the number of symbols, and the number of resource elements.

The traffic information can include information indicating periodic or aperiodic traffic. In the case of the periodic traffic, the traffic information includes information concerning a period and a transmission interval of the traffic. In the case of the aperiodic traffic, the traffic information includes information concerning an occurrence condition of traffic and statistic amounts (for example, a mean, a median, a variance, and a standard deviation) of a transmission period or a transmission interval.

The type information (the use case information) includes information concerning V2X, tethering, an eMBB (Enhanced Mobile Broadband), URLLC (Ultra-Reliable and Low Latency Communications), mMTC (Massive Machine Type Communications), a TSN (Time Sensitive Network), and control in an application layer.

### (Past information of SL transmission in the past)

The past information includes, for example, information concerning SL transmission before SL transmission in which SL sensing is performed. More specifically, the past information can include the device information, the position information, the date and time information, the environment information, the coordination information, the transmission information, the sensor information, or the past learning information such as the resource excluded, the resource sensed, and the resource selected in the sensing method (steps A1 to A8).

### (Sensor information acquired by a camera or a sensor)

For example, the sensor information includes object information concerning an object detected through a camera, a sensor, or the like or influence information concerning fluctuation or influence on wireless communication by the object.

For example, the object information includes an image acquired in real time by the camera, an image acquired from a video, and three-dimensional space information generated in real time from the video using a photogrammetry technology and a volumetric capture technology. The three-dimensional space information may be treated as the structure information explained above.

The object detected by the camera or the sensor includes various things such as a sensor device including the camera or the sensor, another device different from the sensor device, and the terminal device 40 that transmits sensor information. The terminal device 40 that transmits the sensor information may be a sensor device including a camera, a sensor, or the like. The terminal device 40 and the sensor device may be respectively separate devices.

When the terminal device 40 that transmits the sensor information and the sensor device are respectively the separate devices, it is preferable that the devices transmit and receive the sensor information by wired or wireless communication.

Examples of the sensor that acquires sensor information include a photoelectric sensor, a fiber sensor, a laser sensor, a color sensor, a proximity sensor, an overcurrent type displacement sensor, and a contact type displacement sensor. Examples of the sensor include an ultrasonic sensor, an image discrimination sensor, a pressure sensor, a vibration sensor, and an inertial measurement sensor.

Note that sensor information acquired by sensing by the camera or the sensor may include various kinds of sensing information in addition to detection information of the object. For example, the sensor information includes beam information (information such as a beam pattern and a beam angle) concerning a beam transmitted from the base station 20 or the terminal device 40.

### (Future information concerning a communication situation in future of the TxUE 40T and/or the RxUE 40R)

The future information includes, for example, information concerning a schedule (including expectation) of the next SL transmission or reception.

### (Event information concerning an event and a performance in an area (a place) where communication is performed)

The event information includes, for example, information concerning a place where an event or a performance is held or information concerning a distance from the place to the TxUE 40T or the RxUE 40R. The event information includes information concerning a date and time when the event or the performance is performed.

### (Teacher Data information concerning teacher data used when supervised learning of an AI model is performed)

The teacher data information includes, for example, the number, a type, accuracy, or the like of the teacher data.

### [Teacher data]

Subsequently, an example of teacher data (correct answer data) used when supervised learning of an AI model is performed is explained.

Examples of the teacher data include data indicating whether SL communication (for example, a PSCCH and/or a PSSCH) controlled by the AI model has been correctly received by the RxUE 40R. For example, data (for example, the learning information explained above) input to the AI model when the SL communication has been correctly received is the correct answer data.

Note that, for example, the TxUE 40T can recognize, based on HARQ feedback transmitted through a PSFCH, whether the RxUE 40R has correctly received the SL communication.

Examples of the teacher data include data indicating whether SL communication (for example, a PSCCH and/or a PSSCH) controlled by the AI model has been correctly received by the RxUE 40R within a predetermined number of times of retransmission. For example, data (for example, the learning information explained above) input to the AI model when the SL communication has been correctly received within the predetermined number of times of retransmission is the correct answer data.

Note that, for example, the TxUE 40T can recognize, based on the HARQ feedback transmitted through the PSFCH and the number of times of retransmission by the TxUE 40T, whether the RxUE 40R has correctly received the SL communication within the predetermined number of times of retransmission.

Examples of the teacher data include data indicating whether a resource selected by the AI model is reception power (for example, an RSRP value, interference power, or noise power) equal to or smaller than (or smaller than) a predetermined value in the RxUE 40R and/or the TxUE 40T. For example, data (for example, the learning information explained above) input to the AI model when the reception power of the selected resource is equal to or smaller than (or smaller than) the predetermined value is the correct answer data.

Note that, for example, the RxUE 40R and/or the TxUE 40T can recognize whether the reception power of the selected resource is equal to or smaller than (or smaller than) the predetermined value by measuring the reception power of the selected resource.

### <<4. Other embodiments>>

The embodiment explained above indicates an example. Various changes and applications of the embodiment are possible.

For example, various parameters (RRC parameters) notified from the base station 20 in the embodiment explained above may be determined by the base station 20 using an AI model.

For example, in step A3 of the procedure of the sidelink sensing explained above, the TxUE 40T sets the RSRP threshold using the parameters notified from the base station 20. These parameters may be parameters determined by the base station 20 using an AI model.

As explained above, the base station 20 may determine the parameters notified from the base station 20 to the TxUE 40T using the AI model. At this time, the base station 20 can determine the parameters using the same AI model as the AI model used by the TxUE 40T.

In the embodiment explained above, the TxUE 40T can optionally perform the resource selection control using an AI model. However, the resource selection control performed by the TxUE 40T may be limited.

For example, limitations (for example, an upper limit and/or a lower limit) may be provided for start timing and end timing of the Sensing window (or width (a period) of the Sensing window) selectable by the TxUE 40T using an AI model. These limitations can be set in advance or by the base station 20.

As explained above, by setting limitations for parameters (the start timing, the end timing, a threshold, and the like of the Sensing window explained above) selectable using an AI model, it is possible to ensure fairness with the other UEs 40 that perform the sidelink communication.

For example, the control device that controls the base station 20 and the terminal device 40 in the embodiment explained above may be implemented by a dedicated computer system or may be implemented by a general-purpose computer system.

For example, a communication program for executing the operation explained above is distributed by being stored in a computer-readable recording medium such as an optical disk, a semiconductor memory, a magnetic tape, or a flexible disk. Then, for example, the program is installed in a computer and the control device is configured by executing the processing explained above. At this time, the control device may be a device (for example, a personal computer) on the outside of the base station 20 and the terminal device 40. The control device may be a device (for example, the control units 24 and 45) on the inside of the base station 20 and the terminal device 40.

The communication program explained above may be stored in a disk device included in a server device on a network such as the Internet to make it possible to download the communication program to a computer. The functions explained above may be implemented by cooperation of an OS (Operating System) and application software. In this case, a portion other than the OS may be stored in a medium and distributed or the portion other than the OS may be stored in the server device such that the portion can be downloaded to the computer.

Among the kinds of processing explained in the embodiment, all or a part of the processing explained as being automatically performed can be manually performed or all or a part of the processing explained as being manually performed can be automatically performed by a publicly-known method. Besides, the processing procedures, the specific names, and the information including the various data and parameters explained in the document and illustrated in the figures can be optionally changed except when specifically noted otherwise. For example, the various kinds of information illustrated in the figures are not limited to the illustrated information.

The illustrated components of the devices are functionally conceptual and are not always required to be physically configured as illustrated in the figures. That is, specific forms of distribution and integration of the devices are not limited to the illustrated forms and all or a part thereof can be functionally or physically distributed and integrated in any unit according to various loads, use situations, and the like. Note that this configuration by the distribution and the integration may be dynamically performed.

The embodiments explained above can be combined as appropriate in a range for not causing processing contents to contradict one another. The order of the steps illustrated in the sequence chart of the embodiment explained above can be changed as appropriate.

For example, the present embodiment can be implemented as any configuration configuring a device or a system, for example, a processor functioning as a system LSI (Large Scale Integration) or the like, a module using a plurality of processors or the like, a unit using a plurality of modules or the like, a set obtained by further adding other functions to the unit, and the like (that is, a configuration of a part of the device).

Note that, in the present embodiments, the system means a set of a plurality of components (devices, modules (components), and the like). It does not matter whether all the components are present in the same housing. Therefore, both of a plurality of devices housed in separate housings and connected via a network and one device in which a plurality of modules are housed in one housing are systems.

For example, the present embodiment can adopt a configuration of cloud computing in which one function is shared and processed by a plurality of devices in cooperation via a network.

### <<5. Conclusion>>

Although the embodiment of the present disclosure is explained above, the technical scope of the present disclosure is not limited to the embodiment per se, and various modifications can be made without departing from the gist of the present disclosure. Components in different embodiments and modifications may be combined as appropriate.

The effects in the embodiments explained in this specification are only illustrations and are not limited. Other effects may be present.

Note that the present technique can also take the following configurations.
(1) A terminal device comprising:
   a communication unit that performs sidelink communication with another terminal device; and
   a control unit that selects a resource for the sidelink communication based on an AI model, wherein
   the communication unit transmits at least one of a PSCCH and a PSSCH to the other terminal device using the resource selected by the control unit.
(2) The terminal device according to (1), wherein the control unit selects the resource out of a selection window using the AI model.
(3) The terminal device according to (1) or (2), wherein
   the control unit
   performs sensing of a section of a part of a sensing window, and
   selects, using the AI model, the resource based on the section the part in which the sensing was performed and a remaining section in which the sensing was not performed.
(4) The terminal device according to (1), wherein the control unit selects the resource using the AI model without performing sensing.
(5) The terminal device described in (4), wherein
   the control unit
   acquires information concerning the AI model from at least one of a base station and the other terminal device, and
   selects the resource using the information concerning the AI model.
(6) The terminal device described in (4), wherein the control unit selects the resource using information concerning the AI model set in advance.
(7) The terminal device according to any one of (1) to 6), wherein the control unit selects the resource using an AI model generated by a base station.
(8) The terminal device according to (7), wherein the control unit acquires model information concerning the AI model from the base station.
(9) The terminal device according to (8), wherein the model information includes information for designating the AI model used for the selection of the resource among a plurality of the AI models.
(10) The terminal device according to (8), wherein the model information includes all information used for selecting the resource using the AI model.
(11) The terminal device according to (8), wherein the model information includes information concerning update of the AI model.
(12) The terminal device according to ny one of (8) to (11), wherein the model information is periodically transmitted.
(13) The terminal device according to any one of (8) to (11), wherein the model information is transmitted when a predetermined condition is satisfied.
(14) The terminal device according to (13), wherein the predetermined condition is determined according to communication quality and a moving distance of one of the own device and the other terminal device.
(15) The terminal device according to any one of (1) to (6), wherein the control unit generates the AI model used for the selection of the resource.
(16) The terminal device described in (15), wherein the control unit generates the AI model using generation information acquired from at least one of a base station, the other terminal device, and a second terminal device different from the other terminal device.
(17) The terminal device according to any one of (1) to (16), wherein the AI model is generated using at least one of information concerning inter UE coordination transmitted or received by any one of the own device, the other terminal device, and a second terminal device different from the other terminal device, information concerning the sidelink communication performed in past, and information concerning the sidelink communication scheduled by any one of the own device, the other terminal device, and the second terminal device.
(18) The terminal device described in any one of (1) to (17), wherein the control unit selects the resource using the AI model without performing at least one of setting processing for a sensing window, setting processing of a selection window, and exclusion processing for a resource from a set S_{A}.
(19) The terminal device according to any one of (1) to (18), wherein the control unit autonomously determines whether to use the AI model for the selection of the resource.
(20) The terminal device described in (19), wherein the control unit performs autonomous determination when whether to use the AI model is set to be able to be autonomously determined.
(21) The terminal device according to any one of (1) to (20), wherein the AI model is generated by supervised learning.
(22) The terminal device according to (21), wherein the teacher data used for the supervised learning includes data in at least one case of a case in which the sidelink communication is correctly received, a case in which the sidelink communication is correctly received within a predetermined number of times of retransmission, and a case in which reception power in the selected resource is equal to or smaller than a predetermined value.
(23) A terminal device comprising
   a communication unit that performs sidelink communication with another terminal device using a resource selected by the other terminal device, wherein
   the resource is selected by the other terminal device using an AI model.
(24) A communication method comprising:
   performing sidelink communication with another terminal device;
   selecting a resource for the sidelink communication based on an AI model; and
   transmitting at least one of a PSCCH and a PSSCH to the other terminal device using the selected resource.
(25) A communication method comprising
   performing sidelink communication with another terminal device using a resource selected by the other terminal device, wherein
   the resource is selected by the other terminal device using an AI model.

### Reference Signs List

20 BASE STATION
21, 41 SIGNAL PROCESSING UNIT
22, 42 STORAGE UNIT
23 NETWORK COMMUNICATION UNIT
24, 45 CONTROL UNIT
40 TERMINAL DEVICE
44 INPUT/OUTPUT UNIT
211, 411 RECEPTION PROCESSING UNIT
212, 412 TRANSMISSION PROCESSING UNIT
213, 413 ANTENNA

## Claims

1. A terminal device comprising:
a communication unit that performs sidelink communication with another terminal device; and
a control unit that selects a resource for the sidelink communication based on an AI model, wherein
the communication unit transmits at least one of a PSCCH and a PSSCH to the other terminal device using the resource selected by the control unit.

2. The terminal device according to claim 1, wherein the control unit selects the resource out of a selection window using the AI model.

3. The terminal device according to claim 1, wherein
the control unit
performs sensing of a section of a part of a sensing window, and
selects, using the AI model, the resource based on the section the part in which the sensing was performed and a remaining section in which the sensing was not performed.

4. The terminal device according to claim 1, wherein the control unit selects the resource using the AI model without performing sensing.

5. The terminal device according to claim 1, wherein the control unit selects the resource using an AI model generated by a base station.

6. The terminal device according to claim 5, wherein the control unit acquires model information concerning the AI model from the base station.

7. The terminal device according to claim 6, wherein the model information includes information for designating the AI model used for the selection of the resource among a plurality of the AI models.

8. The terminal device according to claim 6, wherein the model information includes all information used for selecting the resource using the AI model.

9. The terminal device according to claim 6, wherein the model information includes information concerning update of the AI model.

10. The terminal device according to claim 6, wherein the model information is periodically transmitted.

11. The terminal device according to claim 6, wherein the model information is transmitted when a predetermined condition is satisfied.

12. The terminal device according to claim 11, wherein the predetermined condition is determined according to communication quality and a moving distance of one of the own device and the other terminal device.

13. The terminal device according to claim 1, wherein the control unit generates the AI model used for the selection of the resource.

14. The terminal device according to claim 1, wherein the AI model is generated using at least one of information concerning inter UE coordination transmitted or received by any one of the own device, the other terminal device, and a second terminal device different from the other terminal device, information concerning the sidelink communication performed in past, and information concerning the sidelink communication scheduled by any one of the own device, the other terminal device, and the second terminal device.

15. The terminal device according to claim 1, wherein the control unit autonomously determines whether to use the AI model for the selection of the resource.

16. The terminal device according to claim 1, wherein the AI model is generated by supervised learning.

17. The terminal device according to claim 16, wherein the teacher data used for the supervised learning includes data in at least one case of a case in which the sidelink communication is correctly received, a case in which the sidelink communication is correctly received within a predetermined number of times of retransmission, and a case in which reception power in the selected resource is equal to or smaller than a predetermined value.

18. A terminal device comprising
a communication unit that performs sidelink communication with another terminal device using a resource selected by the other terminal device, wherein
the resource is selected by the other terminal device using an AI model.

19. A communication method comprising:
performing sidelink communication with another terminal device;
selecting a resource for the sidelink communication based on an AI model; and
transmitting at least one of a PSCCH and a PSSCH to the other terminal device using the selected resource.

20. A communication method comprising
performing sidelink communication with another terminal device using a resource selected by the other terminal device, wherein
the resource is selected by the other terminal device using an AI model.
